(19) **Europäisches Patentamt / European Patent Office / Office européen des brevets**

(11) **EP 4 083 659 B1**

(12) # FASCICULE DE BREVET EUROPEEN

(45) Date de publication et mention de la délivrance du brevet:
**07.02.2024 Bulletin 2024/06**

(21) Numéro de dépôt: **22169557.0**

(22) Date de dépôt: **22.04.2022**

(51) Classification Internationale des Brevets (IPC):
**G01S 15/89** (2006.01)　**G01S 7/52** (2006.01)
**G01S 15/42** (2006.01)　**G01S 7/539** (2006.01)
**G01S 7/527** (2006.01)

(52) Classification Coopérative des Brevets (CPC):
**G01S 7/52003; G01S 7/5273; G01S 7/539; G01S 15/42; G06F 3/017; G10K 11/346;** G01S 7/52028; G01S 7/52036; G01S 15/8915

(54) **DISPOSITIF ET PROCÉDÉ DE TRAITEMENT DU SIGNAL ISSUS D'UN ENSEMBLE DE TRANSDUCTEURS ULTRASONORES**

VORRICHTUNG UND VERFAHREN ZUR VERARBEITUNG VON SIGNALEN AUS EINER GESAMTHEIT VON ULTRASCHALLWANDLERN

DEVICE AND METHOD FOR PROCESSING THE SIGNAL FROM A SET OF ULTRASONIC TRANSDUCERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2021 FR 2104297**

(43) Date de publication de la demande:
**02.11.2022 Bulletin 2022/44**

(73) Titulaire: **Commissariat à l'énergie atomique et aux énergies alternatives 75015 Paris (FR)**

(72) Inventeurs:
- **HARDY, Emmanuel** 38054 GRENOBLE (FR)
- **FAIN, Bruno** 38054 GRENOBLE (FR)
- **MESQUIDA, Thomas** 38054 GRENOBLE (FR)
- **RUMMENS, François** 38054 GRENOBLE (FR)
- **VIANELLO, Elisa** 38054 GRENOBLE (FR)

(74) Mandataire: **Atout PI Laplace Immeuble "Visium" 22, avenue Aristide Briand 94117 Arcueil Cedex (FR)**

(56) Documents cités:
- **CHEN HUI ET AL: "Angle-of-arrival-based gesture recognition using ultrasonic multi-frequency signals", 2017 25TH EUROPEAN SIGNAL PROCESSING CONFERENCE (EUSIPCO), EURASIP, 28 août 2017 (2017-08-28), pages 16-20, XP033235894, DOI: 10.23919/EUSIPCO.2017.8081160**
- **LING KANG ET AL: "UltraGesture: Fine-Grained Gesture Sensing and Recognition", 2018 15TH ANNUAL IEEE INTERNATIONAL CONFERENCE ON SENSING, COMMUNICATION, AND NETWORKING (SECON), IEEE, 11 juin 2018 (2018-06-11), pages 1-9, XP033367933, DOI: 10.1109/SAHCN.2018.8397099**
- **LI XINGYU ET AL: "SonicOperator: Ultrasonic gesture recognition with deep neural network on mobiles", 2017 IEEE SMARTWORLD, UBIQUITOUS INTELLIGENCE & COMPUTING, ADVANCED & TRUSTED COMPUTED, SCALABLE COMPUTING & COMMUNICATIONS, CLOUD & BIG DATA COMPUTING, INTERNET OF PEOPLE AND SMART CITY INNOVATION (SMARTWORLD/SCALCOM/UIC/ATC/CBDCOM/IOP/SCI ), IEEE, 4 août 2017 (2017-08-04), pages 1-7, XP033365898, DOI: 10.1109/UIC-ATC.2017.8397483**

**(Cont. page suivante)**

- IBRAHIM EMAD A ET AL: "Low Complexity Multi-directional In-Air Ultrasonic Gesture Recognition Using a TCN", 2020 DESIGN, AUTOMATION & TEST IN EUROPE CONFERENCE & EXHIBITION (DATE), EDAA, 9 mars 2020 (2020-03-09), pages 1259-1264, XP033781595, DOI: 10.23919/DATE48585.2020.9116482
- NANDAKUMAR RAJALAKSHMI RAJALN@CS WASHINGTON EDU ET AL: "FingerIO Using Active Sonar for Fine-Grained Finger Tracking", HUMAN FACTORS IN COMPUTING SYSTEMS, ACM, 2 PENN PLAZA, SUITE 701 NEW YORK NY 10121-0701 USA, 7 mai 2016 (2016-05-07), pages 1515-1525, XP058627980, DOI: 10.1145/2858036.2858580 ISBN: 978-1-4503-3362-7
- DAS AMIT ET AL: "Ultrasound based gesture recognition", 2017 IEEE INTERNATIONAL CONFERENCE ON ACOUSTICS, SPEECH AND SIGNAL PROCESSING (ICASSP), IEEE, 5 mars 2017 (2017-03-05), pages 406-410, XP033258449, DOI: 10.1109/ICASSP.2017.7952187
- WEI WANG ET AL: "Device-free gesture tracking using acoustic signals", MOBILE COMPUTING AND NETWORKING, ACM, 2 PENN PLAZA, SUITE 701 NEW YORK NY 10121-0701 USA, 3 octobre 2016 (2016-10-03), pages 82-94, XP058279595, DOI: 10.1145/2973750.2973764 ISBN: 978-1-4503-4226-1
- YUN SANGKI SANGKI@CS UTEXAS EDU ET AL: "Turning a Mobile Device into a Mouse in the Air", COMPUTING FRONTIERS, ACM, 2 PENN PLAZA, SUITE 701 NEW YORK NY 10121-0701 USA, 18 mai 2015 (2015-05-18), pages 15-29, XP058510605, DOI: 10.1145/2742647.2742662 ISBN: 978-1-4503-3358-0

## Description

## Domaine technique

L'invention concerne de manière générale le domaine des systèmes de détection et en particulier un dispositif et un procédé de traitement du signal issus d'un ensemble de transducteurs ultrasons.

## État de la technique

Les capteurs ultrasonores sont aujourd'hui utilisés dans de nombreuses applications telles que la localisation dans l'espace, la détection de geste, la reconnaissance d'empreinte, les images biomédicales, etc.

Un capteur à ultrasons émet à intervalles réguliers de courtes impulsions sonores à haute fréquence. Ces impulsions se propagent dans l'air à la vitesse du son. Lorsqu'elles rencontrent un objet, elles se réfléchissent et reviennent sous forme d'écho au capteur. Celui-ci calcule alors la distance le séparant de la cible sur la base du temps écoulé entre l'émission du signal et la réception de l'écho. Un capteur à ultrasons émet à intervalles réguliers de courtes impulsions sonores à haute fréquence. Ces impulsions se propagent dans l'air à la vitesse du son. Lorsqu'elles rencontrent un objet, elles se réfléchissent et reviennent sous forme d'écho au capteur. Celui-ci calcule alors la distance le séparant de la cible sur la base du temps écoulé entre l'émission du signal et la réception de l'écho. Un capteur à ultrasons émet à intervalles réguliers de courtes impulsions sonores à haute fréquence. Ces impulsions se propagent dans l'air à la vitesse du son. Lorsqu'elles rencontrent un objet, elles se réfléchissent et reviennent sous forme d'écho au capteur. Celui-ci calcule alors la distance le séparant de la cible sur la base du temps écoulé entre l'émission du signal et la réception de l'écho. Un capteur ultrasonore émet à intervalles réguliers ou en permanence de courts signaux ultrasonores à haute fréquence. Ces impulsions se propagent dans l'air à la vitesse du son. Lorsqu'elles rencontrent un objet, elles se réfléchissent et reviennent sous forme d'écho sur le capteur qui peut alors calculer la distance qui le sépare de l'objet, en utilisant le temps écoulé entre l'émission du signal et la réception de l'écho par le capteur.

L'utilisation de capteurs ultrasonores requiert souvent un traitement du signal proche capteur relativement lourd pour en extraire les informations pertinentes, selon l'application, telles que par exemple la distance et l'angle pour la localisation d'objet, le type de mouvements pour la détection de geste, des informations de validation dans le cas de reconnaissance d'empreinte, des informations de diagnostic dans le cas d'une image biomédicale.

Différentes solutions de détection de geste ont été proposées telles que des solutions par mesure par temps de vol, comme décrit par exemple dans :

- R. Nandakumar, V. Iyer, D. Tan, and S. Gollakota, "FingerIO: Using Active Sonar for Fine-Grained Finger Tracking," in Proceedings of the 2016 CHI Conférence on Human Factors in Computing Systems, New York, NY, USA, May 2016, pp. 1515-1525, doi: 10.1145/2858036.2858580.

- A. Das, I. Tashev, and S. Mohammed, "Ultrasound based gesture récognition," in 2017 IEEE International Conférence on Acoustics, Speech and Signal Processing (ICASSP), Mar. 2017, pp. 406-410, doi: 10.1109/ICASSP.2017.7952187.

- K. Ling, H. Dai, Y. Liu, and A. X. Liu, "UltraGesture: Fine-Grained Gesture Sensing and Récognition," in 2018 15th Annual IEEE International Conférence on Sensing, Communication, and Networking (SECON), Jun. 2018, pp. 1-9, doi: 10.1109/SAHCN.2018.8397099.

D'autres solutions de détection de geste, basées sur des mesures par Doppler, ont été proposées, comme décrit par exemple dans :

- W. Wang, A. X. Liu, and K. Sun, "Device-free gesture tracking using acoustic signais," in Proceedings of the 22nd Annual International Conférence on Mobile Computing and Networking, New York, NY, USA, Oct. 2016, pp. 82-94, doi: 10.1145/2973750.2973764.

- S. Yun, Y.-C. Chen, and L. Qiu, "Turning a Mobile Device into a Mouse in the Air," in Proceedings of the 13th Annual International Conférence on Mobile Systems, Applications, and Services, New York, NY, USA, May 2015, pp. 15-29, doi: 10.1145/2742647.2742662.

- X. Li, H. Dai, L. Cui, and Y. Wang, "SonicOperator: Ultrasonic gesture recognition with deep neural network on mobiles," in 2017 IEEE SmartWorld, Ubiquitous Intelligence Computing, Advanced Trusted Computed, Scalable Computing Communications, Cloud Big Data Computing, Internet of People and Smart City Innovation (SmartWorld/SCALCOM/UIC/ATC/CBDCom/IOP/SCI), Aug. 2017, pp. 1-7, doi: 10.1109/UIC-ATC.2017.8397483.

- E. A. Ibrahim, M. Geilen, J. Huisken, M. Li, and J. P. de Gyvez, "Low Complexity Multi-directional In-Air Ultrasonic Gesture Recognition Using a TCN," in 2020 Design, Automation Test in Europe Conférence Exhibition (DATE), Mar. 2020, pp. 1259-1264, doi: 10.23919/DATE48585.2020.9116482.

CHEN HUI ET AL: "Angle-of-arrival-based gesture recognition using ultrasonic multi-frequency signals",2017 25TH EUROPEAN SIGNAL PROCESSING CONFERENCE (EUSIPCO), EURASIP, 28 août 2017, pages 16-20, XP033235894,DOI: 10.23919/EUSIPCO.2017.8081160. Ce document divulgue un système de traitement de signaux délivrés par un capteur ultrasonore, le capteur ultrasonore comprenant un ensemble de transducteurs, au moins certains des transducteurs de l'ensemble de transducteurs étant configurés pour émettre des signaux et/ou recevoir des échos correspondant à la réflexion desdits signaux par un objet détecté.

Les capteurs ultrasonores existants présentent cependant des architectures complexes et sont soumis à de fortes contraintes en termes de dimensionnement des composants (bruit, distorsion). En outre, ils mettent généralement en oeuvre des étapes de traitement du signal complexes, telles qu'une étape de transformation de Fourier rapide FFT (acronyme pour « Fast Fourier Transform »), une étape de corrélation, une étape de filtrage non-linéaire, etc. Il en résulte un temps de calcul computationnel, une consommation et un temps de calcul très importants. Par ailleurs, les capteurs ultrasonores existants doivent stocker des représentations intermédiaires du signal, ce qui augmente les ressources matérielles nécessaires.

La modalité ultrasonore des transducteurs ultrasonores pour la mesure de temps de vol n'est pas sensible aux mêmes objets que d'autres modalités (RADAR, optique) (par exemple, une onde ultrasonore sera réfléchie par une vitre transparente).

Par ailleurs, le signal ultrasonore d'un transducteur ultrasonore unique est en général très peu directif, l'onde ultrasonore étant émise ou reçue dans un cône d'émission avec un angle de typiquement plusieurs dizaines de degrés. Il s'ensuit que le traitement du signal émis fournit une localisation d'objet avec une grande incertitude angulaire lorsqu'un capteur ultrasonore est utilisé.

Pour améliorer la résolution angulaire des systèmes de transducteurs ultrasons, il a été proposé d'utiliser des techniques de triangulation et de formations de faisceaux (« beamforming »). Les méthodes de triangulation consistent à mesurer la distance à partir de deux emplacements distincts (ou plus). Le recoupement des deux (ou plus) informations permet de localiser un objet avec une précision améliorée. Cependant, pour être efficace, les deux couples sources/détecteurs doivent être bien espacés l'un de l'autre, ce qui n'est pas toujours possible ou souhaitable en pratique, et peut poser des difficultés d'intégration.

L'approche de beamsteering/beamforming désigne un ensemble de techniques complexes qui permettent respectivement d'ajuster les caractéristiques du faisceau ultrasonore en émission (« beamsteering »), ou d'améliorer la qualité des informations mesurées en réception (« beamforming »). Un tel ensemble de techniques repose sur la construction d'interférences entre les signaux d'un ensemble de transducteurs qui envoie/mesure le signal avec un déphasage temporel, qui correspond à l'angle de réception/d'émission de l'onde plane.

Dans le cas de technique classique de type « beamsteering », les différents transducteurs de l'ensemble de transducteurs ultrasonores émettent des signaux avec un déphasage temporel de manière à ce que les ondes acoustiques générées par les différents transducteurs soient constructives, dans au moins une direction particulière, et destructives dans les autres directions. Plusieurs émissions avec des déphasages différents sont généralement utilisées. La mesure des échos correspondant à ces différentes émissions permet d'améliorer la résolution angulaire. Dans le cas du « beamforming », une seule mesure en réception de l'ensemble de transducteurs peut donner lieu à différents traitements du signal, correspondant à différentes manières d'interférer, chacun correspondant à une direction d'observation. Il est alors possible de déterminer la position angulaire de l'objet. Contrairement à la triangulation, les techniques de « beamforming » imposent que les différents transducteurs soient localisés de manière très proches, avec une distance entre les transducteurs inférieure à une demi-longueur d'onde du signal. A défaut, le système présente des artefacts, c'est-à-dire une émission/sensibilité non souhaitée dans certaines directions. De tels artefacts dégradent largement les performances du système (présence de lobes de réseau dans le diagramme de directivité du capteur ultrason, en raison du repliement de spectre spatial ou « spatial aliasing »).

Dans la mesure où un tel principe de mesure repose sur des interférences entre signaux, il est important que les différents signaux soient à la même fréquence. En pratique, du fait de l'inhomogénéité des fréquences caractéristiques des transducteurs ultrasonores d'un même ensemble de transducteurs, les systèmes ultrasons, en particulier ceux qui mettent en place des techniques de beamforming, utilisent des signaux contenant principalement un régime permanent assez long, car la fréquence du signal en régime permanent ne dépend pas de la fréquence caractéristique du transducteur, et le rapport signal/bruit est plus favorable en régime permanent. De plus, un signal long permet d'améliorer les performances de filtres adaptés (« matched-filter ») classiquement utilisés. Cependant, dans le cas où l'émission et la réception sont réalisés par le (ou les) même(s) transducteur(s), les deux opérations ne peuvent être réalisées en même temps de sorte que le système est « aveugle » pendant la durée de l'émission. Lorsqu'émission et réception sont réalisées par des transducteurs différents, le système est en général également aveugle, car le signal d'émission peut parasiter le signal de réception via un couplage mécanique ou électrique, à moins d'un découplage complexe à mettre en oeuvre. La « zone aveugle » du composant correspond typiquement à une durée de propagation d'environ 1 ms. Dans l'air (célérité du son = 300 m/s), cela correspond à une distance aller-retour de quelques dizaines de centimètres. Par conséquent, il est difficile d'employer les techniques de « beamforming » pour mesurer des distances inférieures à cette distance.

Un autre inconvénient du « beamforming » réside dans la lourdeur des traitements qu'il met en oeuvre, en particulier lorsque de tels traitements doivent être embarqués ou réalisés en temps réel.

Il existe donc un besoin pour un dispositif et un procédé de traitement du signal issus d'un ensemble de transducteurs ultrasons améliorés.

## Définition générale de l'invention

À cet effet, il est proposé un système de traitement de signaux délivrés par un capteur ultrasonore, le capteur ultrasonore comprenant un ensemble de transducteurs, au moins certains des transducteurs de l'ensemble de transducteurs étant configurés pour émettre des signaux et/ou recevoir des échos correspondant à la réflexion des signaux par un objet détecté, des signaux étant transmis par une pluralité de transducteurs du capteur ultrasonore au système de traitement en réponse à la réception d'échos par lesdits transducteurs, le système de traitement étant configuré pour déterminer au moins une information caractéristique relative à l'objet détecté, à partir des signaux reçus des transducteurs du capteur ultrasonore. Avantageusement, le système de traitement comprend un dispositif de couplage configuré pour transformer les signaux reçus d'au moins certains transducteurs de l'ensemble de transducteurs en impulsions, et une unité de traitement d'impulsions configurée pour traiter les impulsions délivrées par le dispositif de couplage.

Le dispositif de couplage comprend :

- une unité de seuillage configurée pour appliquer, pour chaque signal reçu d'un transducteur, un seuillage à un signal dérivé dudit signal reçu du transducteur de manière à extraire une information directionnelle contenue dans la phase du signal dérivé, en utilisant au moins un seuil, l'information extraite comprenant les fronts montants et/ou descendants du signal dérivé ;
- une unité de transformation de signal en impulsions configurée pour transformer le signal dérivé du signal reçu du transducteur en des impulsions contenant la phase du signal, en utilisant le ou les fronts du signal extraits par l'unité de seuillage.

L'unité de traitement d'impulsions est configurée pour déterminer au moins une information caractéristique relative à l'objet détecté à partir des impulsions déterminées par le dispositif de couplage pour tous les signaux reçus des transducteurs.

Dans un mode de réalisation, l'unité de traitement d'impulsions comprend au moins un classificateur.

Dans un mode de réalisation, ledit au moins un classificateur peut comprendre un classificateur principal, le classificateur principal étant un classificateur de type réseau de neurones impulsionnel ou classificateur non-évènementiel.

Dans un mode de réalisation, ledit au moins un classificateur peut comprendre en outre un classificateur secondaire pour déterminer l'amplitude du seuil utilisé par l'unité de seuillage parmi un ensemble de valeurs possibles d'amplitudes de seuil à partir des impulsions reçues du dispositif de couplage.

Dans un mode de réalisation, le système de traitement peut en outre comprendre un ensemble d'amplificateurs, l'ensemble d'amplificateurs comprenant au moins un amplificateur et étant configuré pour amplifier la tension analogique de chaque signal reçu du transducteur.

Le système de traitement peut en outre comprendre un ensemble de filtres passe-bande, l'ensemble de filtres passe-bande comprenant au moins un filtre passe-bande et étant configuré pour filtrer la tension amplifiée par l'ensemble d'amplificateurs de manière à éliminer le bruit en dehors de la bande passante, le signal dérivé de chaque signal reçu du transducteur étant le signal délivré par l'ensemble de filtres passe-bande.

Dans des modes de réalisation, le système de traitement peut comprendre un contrôleur configuré pour adapter un ou plusieurs paramètres de mise en forme des signaux reçus des transducteurs en fonction d'un ou plusieurs critères d'adaptation en utilisant des signaux provenant de l'unité de traitement d'impulsions.

En particulier, le contrôleur peut être configuré pour adapter le seuil utilisé par l'unité de seuillage en fonction de la distance entre le capteur ultrasonore et l'objet, ou en fonction de la qualité de mesures précédentes effectuées par le capteur ultrasonore, la qualité étant calculée dans le domaine des impulsions ou après une conversion en nombre réel de la densité des impulsions.

Dans un mode de réalisation, l'unité de traitement d'impulsions peut comprendre un ensemble de détecteurs de cohérence comprenant au moins un détecteur de cohérence et une unité de détermination d'informations caractéristiques, l'ensemble des détecteurs de cohérence étant configuré pour détecter si les signaux provenant des transducteurs, pour une direction donnée des échos provenant de l'objet, sont cohérents à partir des impulsions délivrées par l'unité de transformation en impulsions, et pour délivrer lesdites impulsions à l'unité de détermination d'informations caractéristiques si une cohérence est détectée.

L'unité de détermination des informations caractéristiques peut être une unité de mesure de la distance et/ou la direction des échos provenant de l'objet.

Dans un mode de réalisation l'unité de détermination des informations caractéristiques peut être un classificateur.

Dans un mode de réalisation, un détecteur de cohérence peut comprendre un intégrateur de fuite pour mesurer un alignement des fronts des signaux reçus des transducteurs de l'ensemble de transducteurs.

Un détecteur de cohérence peut comprendre une unité de fenêtrage configurée pour appliquer un fenêtrage pour détecter une cohérence entre les signaux reçus des transducteurs à partir des impulsions délivrées par le dispositif de couplage, l'unité de fenêtrage étant configurée pour décompter le nombre d'impulsions, parmi tous les canaux de transmission correspondant aux différents transducteurs de l'ensemble de transducteurs, dans une fenêtre de largeur donnée.

Dans des modes de réalisation, le système de traitement peut comprendre en outre un filtre passe-bas en sortie de l'ensemble de détecteurs de cohérence configurés pour fournir une image de la densité des impulsions délivrées par l'ensemble de détecteurs de cohérence et une unité d'échantillonnage configurée pour échantillonner le signal à basse-fréquence reçu du filtre passe-bas.

Le système de traitement peut comprendre en outre un compteur asynchrone agencé en sortie de l'ensemble de détecteurs de cohérence configuré pour décompter les impulsions et échantillonner la sortie de l'ensemble de détecteurs de cohérence avec un signal d'horloge.

Dans un mode de réalisation, le système de traitement peut comprendre en outre un détecteur de mouvement agencé en sortie de l'ensemble de détecteurs de cohérence pour détecter la présence de mouvement dans la zone surveillée par le capteur ultrasonore.

Il est en outre fournit un procédé de traitement de signaux délivrés par un capteur ultrasonore, le capteur ultrasonore comprenant un ensemble de transducteurs, au moins certains des transducteurs de l'ensemble de transducteurs émettant des signaux et/ou recevant des échos correspondant à la réflexion des signaux par un objet détecté, le procédé comprenant la détermination d'au moins une information caractéristique relative à l'objet détecté, à partir des signaux reçus des transducteurs du capteur ultrasonore. Avantageusement, le procédé comprend une étape de transformation des signaux reçus d'au moins certains transducteurs de l'ensemble de transducteurs en impulsions, et une étape de traitement des impulsions, l'étape de transformation comprenant, pour chaque signal reçu d'un transducteur :

**[0036]** - une application d'un seuillage à un signal dérivé dudit signal délivré par le transducteur de manière à extraire une information directionnelle contenue dans la phase du signal dérivé, en utilisant au moins un seuil, l'information extraite comprenant les fronts montants et/ou descendants du signal dérivé ;

**[0037]** - une transformation du signal dérivé du signal reçu du transducteur en des impulsions contenant la phase du signal, en utilisant le ou les fronts du signal extraits dans l'étape d'application d'un seuillage,

l'étape de traitement des impulsions comprenant la détermination des informations caractéristiques à partir des impulsions déterminées pour tous les signaux reçus des transducteurs.

Les modes de réalisation de l'invention permettent ainsi de coupler les transducteurs d'un capteur ultrasonore et une unité de traitements d'impulsions (réseau de neurones impulsionnel par exemple), en utilisant un couplage simplifié et adapté aux contraintes de dimensionnement des composants (bruit, distorsion). Un tel couplage permet avantageusement de remplacer des étapes de traitement du signal complexes (FFT, corrélation, filtrage non-linéaire, etc.) par des opérations simples (délai, somme, produit scalaires). Il en résulte de nombreux avantages dont notamment :

- une diminution drastique de la consommation et du temps de calcul ;

- une élimination du stockage de représentations intermédiaires du signal ;

- une amélioration du compromis entre la complexité et la qualité de l'information donnée par le système de traitement.

La présente invention fournit ainsi un couplage de transducteurs ultrasonores avec une unité de traitement d'impulsions permettant de délivrer de manière optimisée (notamment de manière plus rapide, plus fiable, moins énergivore, et moins chronophage) une information contenue dans le signal initial issu des transducteurs.

Brève Description des Figures

D'autres caractéristiques, détails et avantages de l'invention ressortiront à la lecture de la description faite en référence aux dessins annexés donnés à titre d'exemple et qui représentent, respectivement :

[Fig.1] La figure 1 est un diagramme représentant un exemple de système opérationnel dans lequel est utilisé un système de traitement des signaux issus d'un ensemble de transducteurs ultrasons selon des modes de réalisation de l'invention ;

[Fig.2] La figure 2 est un schéma illustrant différents régimes d'un signal (« burst ») ultrasonore de courte durée ;

[Fig.3] La figure 3 est un schéma illustrant un déphasage en fonction de l'angle d'incidence de l'écho reçu ;

[Fig.4] La figure 4 est un schéma illustrant le principe du filtre adapté ('match filter'), qui permet de calculer le temps de vol par corrélation du signal émis avec le signal reçu ;

[Fig.5] La figure 5 est un diagramme du système de traitement, dans lequel l'unité de traitement d'impulsions comprend un classificateur de type réseau de neurones impulsionnel, selon un premier mode de réalisation ;

[Fig.6] La figure 6 illustre le signal électronique d'excitation typique d'un transducteur, constitué de plusieurs signaux successifs ;

[Fig.7] La figure 7 illustre la transformation du signal d'entrée en impulsions contenant la phase du signal en utilisant le front montant après un seuillage selon un mode de réalisation ;

[Fig.8] La figure 8 représente un mode de réalisation dans lequel l'unité de traitement d'impulsions comprend un classificateur principal utilisé pour la détection de gestes et un classificateur secondaire utilisé pour une sélection de seuil ;

[Fig.9] La figure 9 est un diagramme du système de traitement, dans lequel l'unité de traitement d'impulsions comprend un ensemble de détecteurs de cohérence, selon une deuxième forme de réalisation ;

[Fig.10] La figure 10 illustre une détection de cohérence avec un intégrateur de fuite, selon un mode de réalisation de l'invention ;

[Fig.11] La figure 11 illustre une détection de cohérence par fenêtrage selon un mode de réalisation de l'invention ;

[Fig.12] La figure 12 illustre les sorties simultanées d'un détecteur de cohérence dans des directions d'angles $\alpha$ et 0°, selon un exemple de réalisation ;

[Fig.13] La figure 13 est un diagramme du système de traitement, dans lequel l'unité de traitement d'impulsions comprend un réseau de neurones impulsionnel, selon une troisième forme de réalisation ;

[Fig.14] La figure 14 est un diagramme du système de détection d'objets utilisant un détecteur de cohérence et un classificateur non-évènementiel ;

[Fig.15] La figure 15 est un diagramme du système de détection d'objets utilisant un détecteur de cohérence, un classificateur non-évènementiel et un détecteur de mouvement, selon une quatrième forme de réalisation ;

[Fig.16] La figure 16 représente une matrice de distance, avec une différentiation trame par trame et détection de mouvement ;

[Fig.17] La figure 17 est un organigramme représentant le procédé de de traitement de signaux issus d'un ensemble de transducteurs ultrasons.

**Description détaillée de la demande**

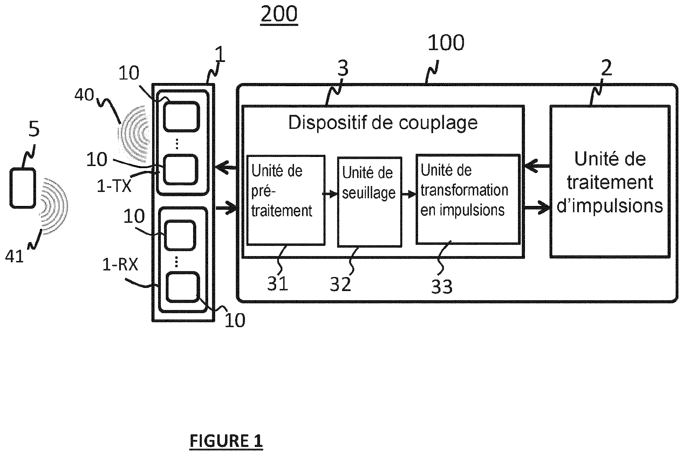

La figure 1 représente un exemple de système opérationnel 200 dans lequel est utilisé un capteur ultrasonore 1 comprenant un ensemble de transducteurs ultrasons 10 et un système 100 de traitement des signaux issus des transducteurs 10 du capteur ultrasonore 1, selon certains modes de réalisation de l'invention.

L'ensemble de transducteurs 10 du capteur ultrasonore comprend au moins deux transducteurs ultrasons.

Le système de traitement comprend un dispositif de couplage 3 et une unité de traitement d'impulsions 2. Le dispositif de couplage 3 est configuré pour coupler les transducteurs 10 du capteur ultrasonore 1 avec l'unité de traitement d'impulsions 2.

L'ensemble de transducteurs ultrasons 10 peut comprendre un sous-ensemble de transducteurs d'émission 1-TX et un sous-ensemble de transducteurs de réception 1-RX. En variante, les mêmes transducteurs 10 peuvent être utilisés en émission et en réception.

Les transducteurs 10 peuvent être par exemple des transducteurs de type MEMS.

Avantageusement, les transducteurs ultrasonores 10 de l'ensemble de transducteurs 1 peuvent être localisés au même endroit, ce qui garantit une compacité du système.

Dans un mode de réalisation, l'unité de traitement d'impulsions peut comprendre un classificateur 2 tel qu'un réseau de neurones impulsionnel de type SNN ou un classificateur non-évènementiel (par exemple, réseau de neurones convolutionnel ou tout autre classificateur).

Tel qu'utilisé ici, le terme «classificateur non-évènementiel » fait référence à tout classificateur mettant en oeuvre une classification non-évènementielle, autre qu'un réseau de neurones impulsionnel. Un classificateur non-évènementiel utilise une représentation de la donnée sous forme d'une séquence de valeurs réelles plutôt que sous la forme d'impulsions où l'information est contenue dans leur nombre et position. Des exemples de classificateurs non-évènementiels comprennent, sans limitation, les réseaux de neurones formels (par exemple réseau de neurones récurrent), les classificateurs basés sur des algorithmes GMM (acronyme pour 'Gaussian Mixture model' signifiant 'Modèle de Mélange Gaussien') suivi d'un Modèle de Markov caché (HMM), des algorithmes SVM (acronyme pour 'Support Vector Machine (SVM)' signifiant 'Machine à Vecteurs de Support'), des algorithmes de régression logistiques, des algorithmes basés sur des modèles de type arbres de décisions, ou encore des classificateurs utilisant des règles prédéfinies sans apprentissage (non apprises automatiquement). Des exemples d'implémentation du classificateur peuvent être un réseau de neurones récurrent, un modèle de mélange gaussien (GMM) suivi par Modèle de Markov caché (HMM), ou un ensemble de règles prédéfinies sans apprentissage.

Des signaux (signaux émis 40) sont initialement envoyés par les transducteurs ultrasonores 10. De tels signaux sont de nature ultrasonore. Lorsque ces signaux rencontrent un objet 5 (objet détecté), des échos sont formés et réfléchis (signaux réfléchis 41) vers l'ensemble de transducteurs 10. Les signaux réfléchis 41 par l'objet 5 et reçus par l'ensemble de transducteurs 1 (signal reçu) sont ensuite traités par le système de traitement 100 pour déterminer des informations caractéristiques relatives à l'objet détecté, en fonction de l'application de l'invention. Les informations caractéristiques peuvent comprendre par exemple la distance séparant le capteur ultrasonore 1 de l'objet, dans une application de détection d'objets.

Le système de traitement 100 selon les modes de réalisation de l'invention est avantageusement configuré pour exploiter le fait que le signal physique en sortie des transducteurs ultrasons 10 est relativement proche de ce qui est attendu en entrée de l'unité de traitement d'impulsions 2 (réseau de neurones SNN par exemple).

Le système de traitement 100 peut être utilisé dans diverses applications telles que par exemple et sans limitation, dans la détection d'objet (détection de distance et/ou d'angle d'objet détecté), la détection de geste, ou encore pour la reconnaissance de pattern dans des images formées à partir de signaux ultrasonores.

Par exemple, dans une application de l'invention à la détection de distance d'objet, d'angle d'objet, ou de gestes, le système de traitement 100 peut être utilisé pour déterminer des informations caractéristiques relatives à l'objet détecté en effectuant des mesures par temps de vol ou par effet Doppler.

Dans une telle application, la propagation d'un signal physique est utilisée pour caractériser un objet 5 situé à distance. Lorsque les signaux émis 40 par le capteur ultrasonore 1 rencontre un objet, les signaux réfléchis 41 par l'objet (échos) et reçus par les transducteurs 10 peuvent être mesurés à un temps ultérieur en utilisant un traitement de signal adapté pour déterminer la distance entre la source des signaux, correspondant à l'ensemble de transducteurs ultrasonores 10, et l'objet 5 rencontré par les signaux émis, selon une mesure par « temps de vol ».

Dans une application de l'invention, les informations caractéristiques relatives à l'objet détecté, déterminées par l'unité de traitement d'impulsions 2 du système de traitement 100, peuvent comprendre la distance $d$ qui sépare l'ensemble 1 de transducteurs ultrasonores de l'objet détecté. Dans une telle application, la distance $d$ peut être déterminée à partir du temps $T_{vol}$ entre le début de l'émission du signal ultrasonore du capteur 1 (ensemble de signaux émis par les transducteurs 10) et le début de l'écho reçu par le capteur 1 (ensemble de signaux réfléchis par les transducteurs 10), selon une équation fonction du temps de vol $T_{vol}$ comme par exemple l'équation (1) :

$$d = \frac{cT_{vol}}{2} \quad (1)$$

Le facteur 2 présent dans le dénominateur de l'équation (1) prend en compte l'aller et le retour de l'écho, en supposant que l'émetteur (transducteurs ultrasonores 10) est proche du récepteur (objet détecté 5). Dans l'équation (1), $c$ désigne la vitesse de propagation des ondes acoustiques dans le milieu considéré.

D'autres techniques de mesures de distance $d$ peuvent être utilisées par l'unité de traitement d'impulsions 2 pour déterminer l'information de distance $d$, telles que par exemple une mesure de distance par émission continue avec modulation de fréquence, ou une mesure par radar FMCW.

Dans une autre application de l'invention, les informations caractéristiques déterminées par l'unité de traitement d'impulsions 2 du système de traitement 100 peuvent comprendre la vitesse radiale de l'objet 5. Dans une telle application, le système de traitement 100 peut utiliser une mesure de vitesse radiale par effet Doppler, qui fournit la vitesse radiale au lieu de la position de l'objet (distance et/ou angle de l'objet), par exemple pour une application de détection de gestes. Une telle approche de mesure par effet Doppler repose sur :

- l'émission d'un signal à fréquence fixe $f_0$ ;

- La réflexion sur un objet mouvant se déplaçant à une vitesse radiale $v$, comme par exemple une main qui fait un geste, qui crée des échos à une fréquence $f_0 + \Delta f$ :

$$\Delta f = \frac{v}{c} f_0 \quad (2)$$

- La séquence et la signature en fréquence selon différentes directions permettant de différencier les gestes.

L'émission du signal ultrasonore émis par un capteur ultrasonore 1 peut être constituée de plusieurs composantes à plusieurs fréquences.

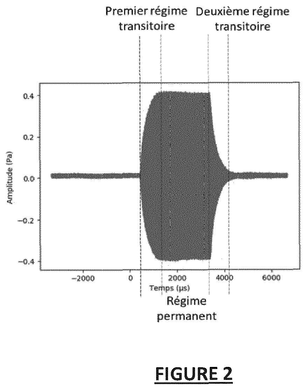

La figure 2 illustre différents régimes d'un signal ('burst' en langue anglo-saxonne) ultrasonore court.

La figure 2 correspond à un signal émis par un transducteur ultrasonore 10 excité par un signal électrique à fréquence et amplitude fixes. Le signal électrique est constitué d'un ensemble de sinusoïdes, avec une seule et même fréquence, alors que le signal ultrasonore est constitué d'un premier régime transitoire d'excitation (1), d'un régime permanent (2) et d'un deuxième régime transitoire de désexcitation (3). Les régimes (1) et (2) sont réalisés à une fréquence caractéristique du transducteur ultrasonore 10, encore appelée 'fréquence caractéristique' ci-après. La fréquence caractéristique dépend de la fréquence propre du transducteur 10 et de son facteur de qualité. Le deuxième régime transitoire (3) présente un signal sinusoïdal à la fréquence d'excitation. La différence entre les deux fréquences d'intérêt est typiquement de quelques pourcents (%). La durée des régimes transitoires est proportionnelle au facteur de qualité du transducteur. Par exemple, pour un facteur de qualité de 50, 100 cycles sont généralement nécessaires pour atteindre le régime permanent (2), ce qui correspond typiquement à 1ms pour une fréquence d'environ 100 kHz. Le système de traitement 100 est avantageusement configuré pour tenir compte de cette différence de quelques pourcents (%) et de l'importance du régime transitoire. En effet, dans le cas particulier de signaux ultrasonores très courts (< 1 ms), le signal est principalement constitué des deux régimes transitoires (1) et (3). La fréquence du signal dépend de la fréquence caractéristique du transducteur. Il est donc difficile de réaliser des interférences entre les signaux issus de différents transducteurs. Le dispositif de couplage 3 met avantageusement en oeuvre une transformation de signal en impulsions et un seuillage permettant d'être plus robuste à cette dispersion en fréquence.

Il est à noter que le signal électrique d'émission d'un transducteur et le signal ultrasonore résultant peuvent être plus complexes. Cependant, la bande passante limitée du transducteur ultrasonore 10 fait que le signal ultrasonore comporte deux régimes transitoires dont les caractéristiques ne dépendent pas que du signal d'émission, mais aussi des caractéristiques propres du transducteur 10.

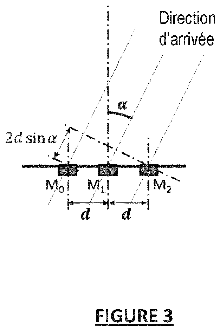

La figure 3 illustre le déphasage en fonction de l'angle d'incidence de l'écho reçu, en utilisant trois transducteurs $M_0$, $M_1$ et $M_2$. Dans l'exemple de la figure 3, le signal arrive avec un angle d'incidence $\alpha$ sur l'ensemble de N transducteurs (10). La différence de distance parcourue par le signal pour arriver aux transducteurs $M_0$ et $M_2$, distants de 2d, est égale à 2d sin $\alpha$.

L'onde acoustique se propage à la vitesse du son c. Le décalage temporel $\delta_t$ entre le signal reçu par $M_0$ et $M_2$ est donc égal à :

$$\delta_t = \frac{2d \sin \alpha}{c} \qquad (3)$$

L'information est contenue dans le décalage temporel, c'est-à-dire dans le déphasage du signal.

Les signaux reçus par les transducteurs 10 du capteur ultrasonore 1 sont traités par le dispositif de couplage 3 et l'unité de traitement d'impulsions 2 pour déterminer la ou les informations caractéristiques relatives à un objet 5, en fonction de l'application de l'invention.

Dans un exemple d'application à la détection d'objet, les informations caractéristiques peuvent par exemple comprendre une information indiquant si un objet a été détecté ou non, ou la distance entre le capteur 1 et l'objet détecté 5 qui peut être déterminée à partir des signaux reçus 41 par les transducteurs 10 en effectuant une corrélation entre les signaux reçus et les signaux attendus (la corrélation est maximale pour un délai correspondant au temps de propagation). Il est possible d'envoyer un signal optimisé dont l'autocorrélation présente des lobes secondaires faibles pour améliorer encore la mesure de distance.

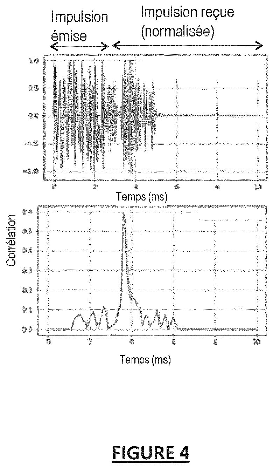

La figure 4 illustre le principe du filtrage adapté (« matched filter ») corrélant le signal émis par le capteur 1 avec le signal reçu par le capteur 1.

Dans un autre exemple d'application de l'invention aux systèmes de type « temps de vol », le système 100 peut être configuré pour déterminer une information caractéristique correspondant à une caractéristique dynamique de l'objet, par exemple son déplacement. La détermination de la caractéristique de l'objet peut être effectuée par traitement de plusieurs signaux statiques successifs, en mesurant la distance et l'angle pour plusieurs scènes successives capturées par le capteur ultrasonore 1, et en traitant de telles mesures.

Alors que les systèmes de traitement existants fournissent des informations intermédiaires du traitement, le système de traitement 100 selon l'invention permet d'effectuer un traitement direct, optimisé, en fournissant directement les informations caractéristiques (par exemple mouvement de droite à gauche dans une application de détection de geste), sans informations intermédiaires.

Pour faciliter la compréhension de l'invention, la suite de la description de certains modes de réalisation sera faite principalement en relation avec un système de traitement 100 utilisé pour la détection d'objet ou de geste à titre d'exemple non limitatif.

Le système de traitement 100 est configuré pour déterminer une information caractéristique (par exemple information de détection telle qu'une mesure de direction et de distance ou une détection de geste) en utilisant un circuit simplifié comprenant le dispositif de couplage 3 et l'unité de traitement d'impulsions 2.

Le système de traitement de signaux 100 est configuré pour traiter les signaux délivrés par les transducteurs ultrasonores 10 du capteur ultrasonore 1.

Au préalable, au moins certains des transducteurs 10 du capteur ultrasonore 1 émettent des signaux 40. Lorsque ces signaux atteignent un objet 5, des échos 41 sont formés correspondant aux signaux réfléchis 41 par un objet détecté 5. Les signaux réfléchis 41 reçus par N transducteurs 10 du capteur ultrasonore 1 sont alors transmis au système de traitement 100. Le système de traitement 100 est configuré pour traiter les signaux issus des N transducteurs afin de déterminer au moins une information caractéristique relative à l'objet détecté 5. Chaque signal issu d'un transducteur 10 est reçu par le dispositif de couplage 3 et correspond à un canal de traitement dans le dispositif de couplage 3.

Le dispositif de couplage 3 (encore appelé dispositif de transformation) est configuré pour transformer les signaux issus des N transducteurs 10 de l'ensemble de transducteurs 1 en impulsions.

L'unité de traitement d'impulsions 2 est configurée pour traiter les impulsions délivrées par le dispositif de couplage 3 afin de déterminer au moins une information caractéristique relative à l'objet détecté.

Avantageusement, le dispositif de couplage 3 comprend :

- une unité de seuillage 32 configurée pour appliquer, pour chaque signal issu d'un transducteur 10, un seuillage à un signal dérivé du signal issu du transducteur considéré 10 de manière à extraire une information directionnelle contenue dans la phase du signal dérivé, en utilisant au moins un seuil, l'information extraite comprenant les fronts montants et/ou descendants du signal dérivé ;

- une unité de transformation de signal en impulsions 33 configurée pour transformer le signal dérivé du signal issu du transducteur en des impulsions contenant la phase du signal, en utilisant le ou les fronts du signal extraits par l'unité de seuillage 32.

L'unité de traitement d'impulsions 2 est configurée pour déterminer les informations caractéristiques relative à un objet détecté 5 à partir des impulsions déterminées par le dispositif de couplage pour tous les signaux issus des transducteurs 10.

Le système de traitement 100 est avantageusement peu gourmand en énergie et assure un couplage entre les transducteurs ultrasons de l'ensemble de transducteurs 1 et le l'unité de traitement d'impulsions 2.

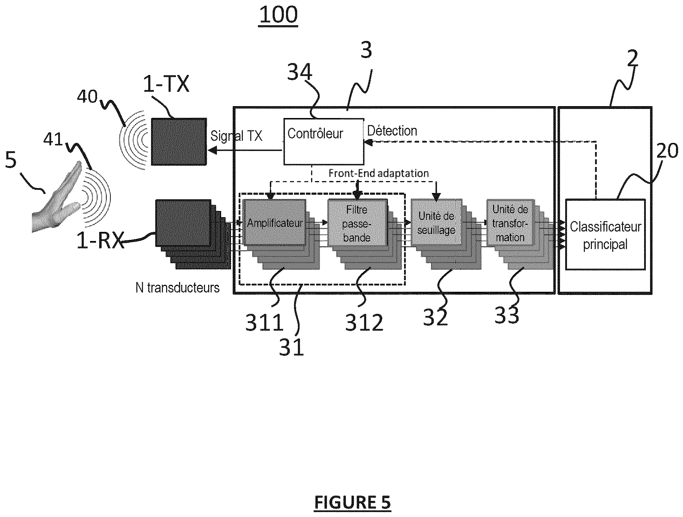

La figure 5 représente un système de traitement 100 des signaux issus de l'ensemble de transducteur 1 dans lequel l'unité de traitement d'impulsions 2 comprend un classificateur 20 de type réseau de neurones impulsionnel, agencé à la sortie de l'unité de transformation en impulsions 33, selon un premier mode de réalisation.

Dans un tel mode de réalisation, le réseau de neurones impulsionnel 20 est capable d'apprendre tout seul une façon optimale d'ajouter un délai et de combiner les différents canaux associés aux transducteurs.

La figure 5 correspond à un exemple d'application de l'invention à la détection de gestes 5 de bout-en-bout (« end-to-end »).

Dans l'exemple de la figure 5, le système de détection comprend un ensemble de transducteurs d'émission 1-TX comprenant une pluralité de transducteurs ultrasonores d'émission 10-TX configurés pour émettre un signal ultrason à une fréquence fixe de courte durée, comme par exemple 250 μs à 100 kHz (signal acoustique).

Pour mesurer des informations caractéristiques relative à un objet 5 (dans l'exemple de la figure 5, l'objet est une main) situé dans la scène couverte par le capteur ultrasonore 1, une répétition des mesures peut être effectuée selon un intervalle de temps. L'intervalle de temps peut être fixe (par exemple, une mesure est effectuée toutes les 10 ms). Les informations caractéristiques relatives à un objet détecté 5 dans la scène du capteur 1 peuvent comprendre la trajectoire de l'objet.

La trajectoire de l'objet 5 peut être déterminée ensuite en agrégeant les résultats des mesures effectuées de manière répétitives pendant une période de temps. Les informations caractéristiques peuvent en outre comprendre des caractéristiques haut-niveau tels que des gestes à partir de la trajectoire déterminée.

Dans un mode de réalisation, le dispositif de couplage 3 du système de détection 100 peut comprendre une unité de pré-traitement 31 formant une partie électronique avant ('front-end') comprenant un ensemble d'amplificateurs 311 et/ou un ensemble de filtres passe-bande 312. L'unité de pré-traitement 31 est configurée pour effectuer la conversion du signal physique (charge, tension, ...), reçu de chacun des N transducteurs (10-RX dans l'exemple de la figure 5) en tension analogique. L'ensemble d'amplificateurs 311 comprend au moins un amplificateur et est configuré pour amplifier la tension analogique ainsi convertie de manière à la rendre plus immune au bruit susceptible de s'ajouter au signal. L'ensemble de filtres passe-bande 312 comprend au moins un filtre passe-bande et est configuré pour filtrer la tension (le cas échéant après amplification par l'ensemble d'amplificateurs 311) afin d'éliminer le bruit en dehors de la bande passante.

Dans l'exemple de la figure 5, l'unité de seuillage 32 est configurée pour appliquer un seuillage au signal filtré délivré par l'unité de pré-traitement 31 (signal dérivé du signal issu de chacun des N transducteurs) afin de récupérer l'information directionnelle contenue dans la phase du signal filtré en utilisant au moins un seuil.

Dans des modes de réalisation, l'unité de seuillage 32 peut être configurée pour appliquer un seuillage au signal dérivé du signal issu de chacun des N transducteurs de manière à ne conserver que le front montant du signal. En variante, l'unité de seuillage 32 peut être configurée pour ne conserver que le front descendant ou les deux fronts (montant et descendant).

Le dispositif de couplage 3 correspond ainsi au domaine analogique, tandis que l'unité de traitement d'impulsions 2 correspond au domaine impulsionnel et le contrôleur 34 correspond à un domaine de signal mixte.

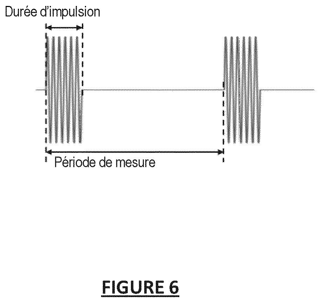

Un exemple de signal électronique d'excitation émis par un transducteur est représenté sur la figure 6, ce signal étant constitué de plusieurs signaux successifs.

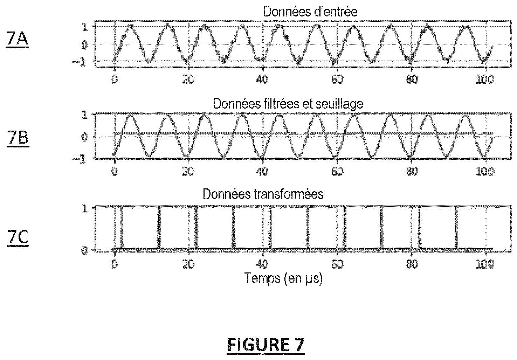

La figure 7 illustre les étapes successives de transformation du signal issu d'un des N transducteurs (10-RX dans l'exemple de la figure 5) en impulsions contenant la phase du signal en ne conservant que le front montant après un seuillage, mise en oeuvre par le dispositif de couplage 3, dans l'exemple de réalisation de la figure 5. Le diagramme supérieur 7A de la figure 7 représente le signal reçu d'un des N transducteurs (10-RX), le diagramme central 7B de la figure 7 représente le signal après amplification par l'ensemble d'amplificateurs 311, filtrage par l'ensemble de filtres passe-bande 312, et seuillage par l'unité de seuillage 32. Le diagramme inférieur 7C de la figure 7 représente les données obtenues après transformation en impulsions par l'unité de transformation 33.

Dans certains modes de réalisation, le dispositif de couplage 3 du système de traitement 100 peut comprendre en outre un contrôleur 34 configuré pour adapter un ou plusieurs paramètres de mise en forme des signaux. Par exemple, le contrôleur 34 peut être configuré pour adapter le seuil utilisé par l'unité de seuillage 32 pour déterminer la phase du signal, selon un ou plusieurs critères d'adaptation tels que des critères relatifs à la distance ou à la qualité du signal. Dans des modes de réalisation, le contrôleur 34 peut être configuré pour adapter les paramètres de mise en forme des signaux issus des N transducteurs dynamiquement ou statiquement.

Dans des modes de réalisation, le contrôleur de paramètres 34 peut être configuré pour adapter le seuil utilisé par l'unité de seuillage 32 en fonction de la distance entre le capteur ultrasonore 1 et l'objet détecté 5. Par exemple, le contrôleur de paramètres 34 peut diminuer la valeur du seuil pendant la mesure pour l'adapter à la diminution de l'amplitude de l'écho du signal avec la distance.

Dans un autre mode de réalisation, le contrôleur de paramètres 34 peut être configuré pour adapter la valeur du seuil en fonction de la qualité de mesures précédentes, calculées dans le domaine des impulsions ou après une conversion en nombre réel de la densité d'impulsions.

En variante, le seuil utilisé par l'unité de seuillage 32 pour obtenir la phase du signal peut être fixe.

Le contrôleur 34 peut utiliser des informations fournies par l'unité de traitement d'impulsions 2.

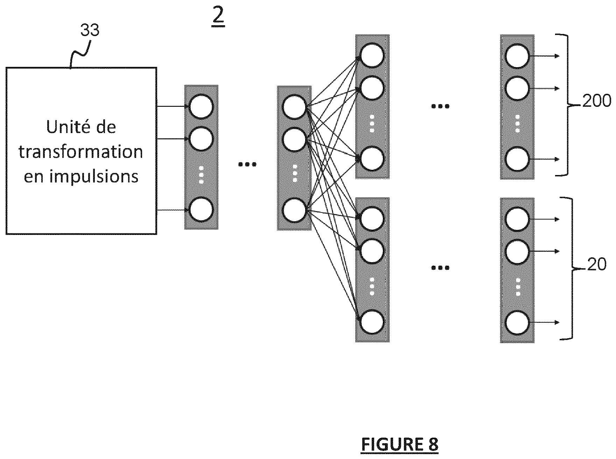

Par exemple, dans un mode de réalisation, l'unité de traitement d'impulsions 2 peut comprendre, en plus du classificateur principal, un classificateur secondaire configuré pour déterminer une amplitude optimale pour le seuil en fonction de représentations intermédiaires de l'information dans la chaîne de transmission, dans un domaine impulsionnel ou non impulsionnel. Dans un mode de réalisation, le classificateur secondaire peut déterminer l'amplitude du seuil parmi un ensemble de valeurs possibles d'amplitude de seuil. Dans un mode de réalisation, le classificateur secondaire peut être un réseau de neurones secondaire de type impulsionnel (SNN), comme illustré sur la Figure 8.

Dans les modes de réalisations où le classificateur 20 est un classificateur non-évènementiel, le dispositif de couplage peut comprendre en outre au moins un détecteur de cohérence.

La figure 8 représente un exemple d'unité de traitement d'impulsions 2 comprenant un classificateur principal 20 de type réseau de neurones SNN utilisé pour déterminer les informations caractéristiques relatives à un objet détecté 5, à partir des impulsions reçues (par exemple pour détecter les gestes), et un classificateur secondaire 200, par exemple de type réseau de neurones SNN, configuré pour sélectionner le seuil à utiliser par l'unité de seuillage 32 et transmettre l'information de seuil au contrôleur 34.

Dans des modes de réalisation, le contrôleur 34 peut en outre être configuré pour synchroniser les différents blocs fonctionnels du système de traitement 100 afin de mettre en oeuvre une rétroaction pertinente. Le contrôleur 34 peut notamment être configuré pour contrôler le moment d'envoi des impulsions (en émission) et synchroniser l'émission avec la réception afin de pouvoir mesurer les informations d'intérêt (par exemple le temps de vol). Le contrôleur 34 peut en outre être configuré pour sélectionner un intervalle temporel d'intérêt dans lequel les échos d'objets situés à un intervalle de distances choisi vont être reçus. Au niveau de la rétroaction, le contrôleur 34 peut récupérer de l'information sur n'importe quel bloc fonctionnel, i.e. sur le signal avant/après amplification, avant/après filtrage, avant/après seuillage pour adapter dynamiquement des paramètres de détection. Par exemple, dans le mode de réalisation de la figure 5, une partie du réseau de neurones impulsionnel 20 est dédiée au choix d'un seuil optimal pour la mesure par canal.

L'unité de transformation d'impulsions 33 est configurée pour déterminer une densité d'impulsions pour chacun des N canaux correspond respectivement aux N transducteurs 10 dont sont issus les signaux traités par le système de traitement 100. Les densités d'impulsions ainsi déterminées peuvent être utilisées en entrée de l'unité de traitement d'impulsions 2.

Dans le mode de réalisation de la figure 5, l'unité de traitement d'impulsions 2 comprend un classificateur principal 20 (par exemple, réseau de neurones à impulsions) pour déterminer des informations de classification à partir des impulsions délivrées par le dispositif de couplage 3, c'est-à-dire sans avoir à passer par une représentation intermédiaire des données. Dans un tel mode de réalisation, les informations caractéristiques relatives à un objet détecté 5 comprennent des informations de classification, par exemple comme des informations de classification de gestes bout-à-bout (« end-to-end ») dans le mode de réalisation de la figure 5.

Dans le mode de réalisation où le classificateur principal 20 est un classificateur non-évènementiel, le classificateur non-évènementiel prend en entrée le signal, qui peut être traité au préalable par un bloc de post-filtrage, sous forme d'un vecteur par trame. À chaque trame t, le classificateur 20 prend une décision sur la nature du geste en fonction de la trame et des trames précédentes et potentiellement des trames suivantes sur une certaine fenêtre.

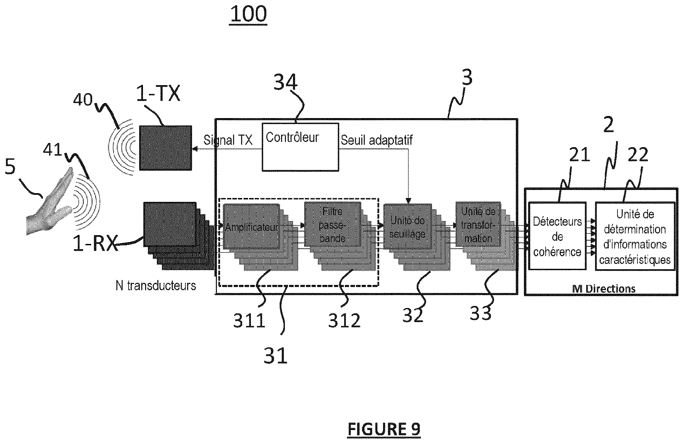

La figure 9 représente un système de traitement 100, selon une deuxième forme de réalisation.

Dans cette deuxième forme de réalisation, les composants 31, 32, 33, et 34 du système de traitement 100 sont similaires à ceux décrits en référence à la figure 5 correspondant au premier mode de réalisation. Cependant, le système de traitement 100 selon la deuxième forme de réalisation diffère du premier mode de réalisation, représenté sur la figure 5, en ce que l'unité de traitement d'impulsions 2 comprend, au lieu du classificateur impulsionnel 20, un ensemble de détecteurs de cohérence 21 comprenant au moins un détecteur de cohérence, suivis d'une unité de détermination d'informations caractéristiques 22. L'unité de détermination d'informations caractéristiques 22 est configurée pour déterminer au moins une information caractéristique relative à un objet détecté 5 par le capteur ultrasonore 1 (par exemple distance et/ou la direction du ou des échos provenant de différents objets de la scène capturée par le capteur ultrasonore 1).

L'ensemble de détecteurs de cohérence 21 exploite les directions d'incidence des échos provenant des différents objets de la scène capturée par le capteur ultrason 1.

Pour vérifier qu'un écho provient d'une direction d'incidence donnée, comme illustré sur la figure 3, il est vérifié que les signaux des $N$ canaux d'émission correspondant aux $N$ transducteurs sont en phase, dans le cas où est appliqué un déphasage théorique associé à cette direction, comme défini par l'équation 2. L'ensemble de détecteurs de cohérence 21 est configuré pour fournir en parallèle une information de cohérence pour M directions à partir des $N$ canaux correspondant respectivement aux $N$ transducteurs.

La sortie d'un détecteur de cohérence 21 a une certaine densité d'impulsions à un instant t selon que les signaux reçus dans cette direction sont cohérents L'ensemble de détecteurs de cohérence 21 détectent ainsi si les signaux reçus dans une direction sont ou non cohérents.

Dans un mode de réalisation, un détecteur de cohérence 21 peut comprendre un intégrateur à fuite LIF pour mesurer l'alignement des fronts des signaux correspondant aux $N$ canaux respectifs correspondant aux $N$ transducteurs.

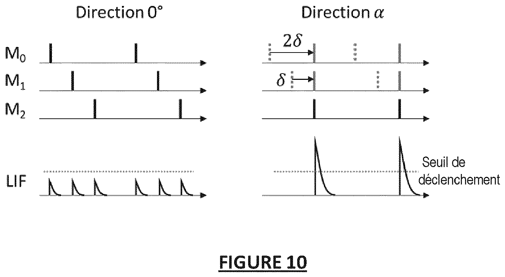

La figure 10 illustre une détection de cohérence mise en oeuvre par l'ensemble de détecteurs de cohérences 21 en utilisant un intégrateur de fuite (acronyme pour « Leaky Integrator and Fire »), en considérant un exemple de M=2 directions (0° et $\alpha$) et M=3 canaux de transmission correspondant à l'utilisation de trois transducteurs d'émission $M_0$, $M_1$ et $M_2$. En supposant que l'écho provienne de la direction d'angle $\alpha$, et en n'appliquant aucun délai sur les canaux, il peut être observé que les trois signaux correspondant aux trois canaux associés respectivement aux trois transducteurs $M_0$, $M_1$ et $M_2$ présentent des fronts qui ne sont pas alignés, comme montré sur le diagramme de gauche de la figure 10. Les fronts seraient alignés si la direction d'incidence était 0°. En appliquant le déphasage théorique associé à la direction d'angle $\alpha$, les fronts deviennent alignés, comme montré sur le diagramme de droite de la figure 10.

L'expression d'un intégrateur de fuite LIF dans le domaine temps discret est donnée dans l'équation (3).

$$\begin{cases} a_n = k a_{n-1} + x_n \\ y_n = 1 \text{ si } a_n \geq \theta, 0 \text{ sinon} \end{cases} \quad (3)$$

Dans l'équation (3) :

- $x_n$ désigne le train d'impulsions reçus en entrée du LIF (correspondant à la sortie de l'unité de transformation de signal en impulsions 33),

- $a_n$ désigne le paramètre d'activation du LIF,

- $y_n$ désigne la sortie du LIF,

- le coefficient k est positif et strictement inférieur à 1, et

- $\theta$ désigne le seuil de cohérence (le seuil de cohérence est distinct du seuil appliqué par l'unité de seuillage 32).

Si le paramètre d'activation $a_n$ est supérieur ou égal au seuil de cohérence $\theta$, la sortie du LIF $y_n$ prend la valeur 1, ce qui signifie qu'une cohérence est détectée entre les signaux correspondant aux $N$ canaux pour une direction donnée.

Dans des modes de réalisation, le LIF peut également être réalisé en temps continu avec une implémentation analogique, selon un principe de fonctionnement similaire. L'équation (3) est alors remplacée par une équation fonction du temps au lieu d'être une équation de récurrence.

L'ensemble de détecteurs de cohérence 21 présente l'avantage de pouvoir fonctionner même si les différents signaux à comparer (signaux correspondant aux $N$ canaux) ont des amplitudes différentes, ce qui est le cas si le signal est en régime transitoire ou si les transducteurs 10 sont différents les uns des autres. Un tel traitement de détection de cohérence est donc robuste à une certaine variabilité technologique.

En outre, l'ensemble de détecteurs de cohérence 21 fonctionne même si les signaux n'ont pas exactement la même fréquence, par exemple en régime transitoire.

Dans une variante de réalisation, l'ensemble de détecteurs de cohérence 21 peut comprendre une unité de fenêtrage configurée pour appliquer un fenêtrage, au lieu d'un LIF pour détecter la cohérence entre les signaux à partir des impulsions reçues.

La détection de cohérence par fenêtrage consiste à décompter le nombre d'impulsions, parmi tous les N canaux d'entrée contenues, dans une fenêtre de faible largeur. Similairement au mode de réalisation dans lequel les détecteurs de cohérence utilisent un LIF, un seuil de cohérence peut être utilisé pour détecter une cohérence entre les signaux correspondant aux $N$ canaux pour une direction donnée. Le seuil de cohérence est alors appliqué au nombre d'impulsions détectées dans la fenêtre qui démarre à la première impulsion.

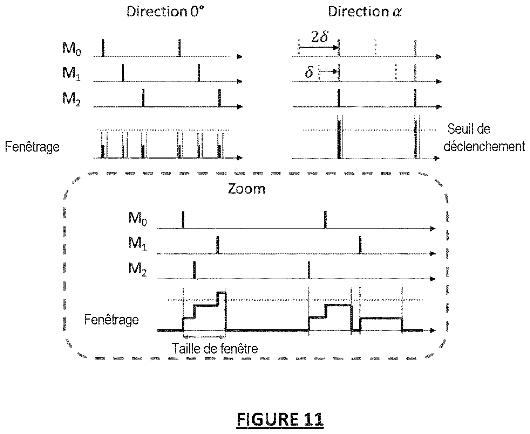

La figure 11 illustre une détection de cohérence mise en oeuvre par l'ensemble de détecteur de cohérences 21 en utilisant un fenêtrage, selon un tel mode de réalisation.

Une fenêtre est appliquée au niveau de la détection de chaque front montant.

L'ensemble de détecteurs de cohérence 21 fournit une sortie sous la forme d'une pluralité de séries d'impulsions. Les impulsions peuvent être directement fournies à un classificateur 20 de type impulsionnel (SNN). Si le classificateur 20 est un classificateur de type classificateur non-évènementiel, les impulsions sont converties en densité d'impulsions avant d'être transmises au classificateur 20. La conversion peut être réalisée en utilisant un bloc de post-traitement comprenant un filtre passe-bas ou un compteur pour décompter le nombre d'impulsions par intervalle de temps (par exemple 10 ms). Plus la densité des impulsions déterminée par le dispositif de couplage 2 est importante à un instant donné, plus il y a de cohérence dans les signaux issus des transducteurs 10 du capteur ultrasonore 1.

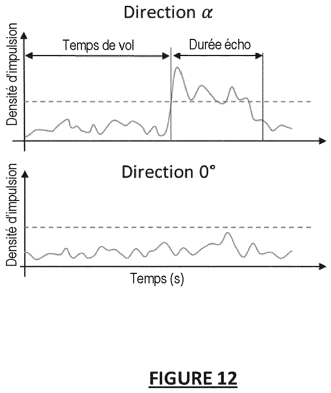

L'unité de détermination d'informations caractéristiques 22 peut être configurée pour déterminer la direction de ou des échos principaux à partir de la sortie du détecteur de cohérence, comme représenté sur la Figure 12.

La Figure 12 illustre la densité des impulsions délivrées par l'ensemble de détecteurs de cohérence 21 en fonction du temps, dans une direction d'écho(s) d'angle $\alpha$ (diagramme supérieur), et dans une direction d'écho(s) d'angle 0° (diagramme du bas). La figure 12 met en évidence le temps de vol pour la mesure de distance.

Un écho venant d'une direction particulière entraîne une densité d'impulsions sur la sortie correspondant à la direction de l'écho plus forte que sur les sorties correspondant aux autres directions possibles. En considérant la valeur moyenne ou le maximum sur une mesure de la densité d'impulsions pour toutes les directions données, la ou les directions d'arrivée des échos peuvent être déterminée(s).

La Figure 12 illustre également le principe de la mesure de distance. En utilisant la même information que pour la direction, la mesure de distance peut être réalisée en sortie de l'ensemble de détecteurs de cohérence 21 en appliquant un seuil de densité d'impulsions à la densité d'impulsions, et en calculant la distance en utilisant l'équation (1).

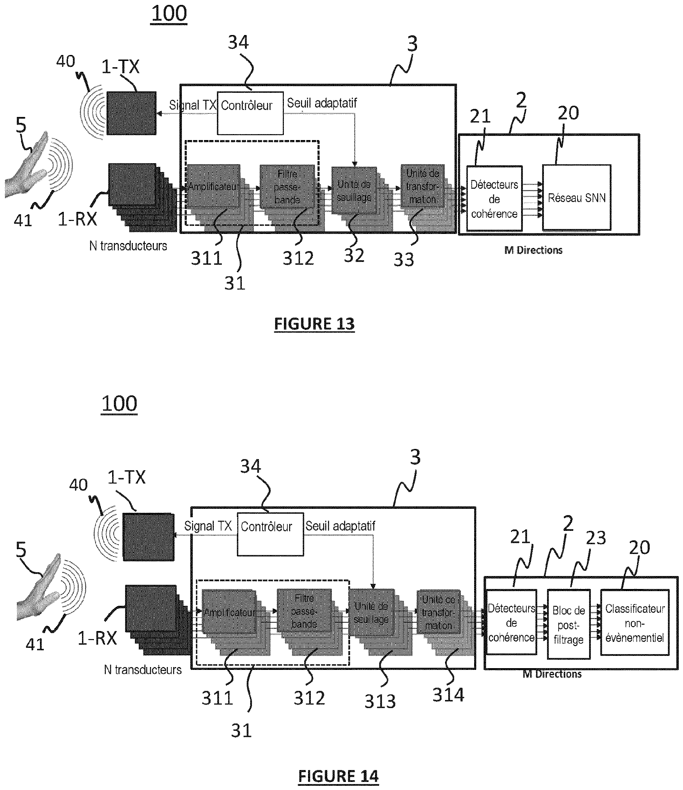

La figure 13 représente un système de traitement 100, selon une troisième forme de réalisation. Le système de traitement 100 selon la troisième forme de réalisation est similaire au système de traitement, selon la deuxième forme de réalisation représentée sur la figure 9, et utilise similairement un ensemble de détecteurs de cohérence 21. Cependant, il utilise en plus un classificateur 20 de type réseau de neurones impulsionnel configuré pour fournir des informations de classification à partir des impulsions délivrées par l'ensemble de détecteurs de cohérence. Un tel classificateur 20 est configuré pour recevoir les séries d'impulsions délivrées par l'ensemble de détecteur de cohérence 21.

L'unité de détermination d'informations caractéristiques 22 du système de détection 100 selon la deuxième forme de réalisation (figure 9) est ainsi remplacée dans la troisième forme de réalisation par le classificateur 20.

La figure 14 représente un système de traitement 100, selon une quatrième forme de réalisation. Le système de traitement 100 selon la quatrième forme de réalisation est similaire au système de traitement, selon la troisième forme de réalisation représentée sur la figure 9, et utilise également un ensemble de détecteurs de cohérence 21. Cependant, il utilise en plus un classificateur 20 de type classificateur non-évènementiel, configuré pour fournir des informations de classification à partir des impulsions délivrées par l'ensemble de détecteurs de cohérence 21, précédé d'un bloc de post-traitement 23. Le bloc de post-traitement 23 est configuré pour convertir les impulsions en densité d'impulsions avant d'être transmises au classificateur non-évènementiel 20. Le bloc de post-traitement 23 peut comprendre un filtre passe-bas en sortie de l'ensemble de détecteur de cohérence 21 pour fournir une image de la densité d'impulsions, plutôt qu'une série d'impulsions, et une unité d'échantillonnage pour échantillonner le signal à basse-fréquence fourni en sortie du filtre passe-bas pour effectuer un traitement des données. En variante, le bloc de post-traitement 23 peut comprendre un compteur asynchrone agencé en sortie de l'ensemble de détecteurs de cohérence 21 pour décompter les impulsions et échantillonner la sortie de l'ensemble de détecteurs de cohérence avec un signal d'horloge.

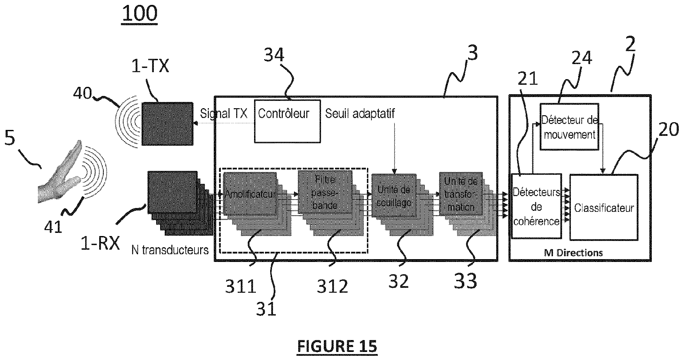

La figure 15 représente un système de traitement 100, selon une cinquième forme de réalisation.

Le système de traitement 100 selon la cinquième forme de réalisation est similaire au système de traitement de la troisième forme de réalisation représentée sur la figure 13, et utilise de manière identique un ensemble de détecteurs de cohérence 21. Cette cinquième forme de réalisation correspond à une application de l'invention à la détection de geste. Le système de traitement 100 selon la cinquième forme de réalisation comprend en outre un détecteur de mouvement 24 pour optimiser la consommation. Le système de traitement 100 selon la cinquième forme de réalisation est notamment configuré pour n'être activé que lorsqu'un mouvement est détecté par le détecteur de mouvement 24. Cela permet d'éviter d'activer la détection de geste en l'absence de mouvement. En effet, la plupart du temps, il n'y a pas de mouvement en face du capteur 1 dans la zone d'intérêt (scène observée par le capteur 1) de sorte qu'il n'est nécessaire dans ce cas de déterminer quel geste a été effectué. Pour réduire la consommation du système dans un tel environnement statique où il n'y a pas de mouvement en face du capteur 1, le classificateur 20 peut être agencé directement sur la sortie de l'unité de transformation en impulsions 33 ou en sortie de l'ensemble de détecteurs de cohérence 21, comme représenté sur la figure 15. Dans l'exemple de la figure 15, le classificateur 20 peut alors effectuer une classification pour détecter un geste que lorsqu'un mouvement est détecté par le détecteur de mouvement.

Dans la suite, il est considéré l'exemple de la figure 15 où la détection de mouvement est effectuée par le détecteur de mouvement 24 en sortie de l'ensemble de détecteurs de cohérence 21.

La sortie de l'ensemble de détecteurs de cohérence 21 peut être représentée par une matrice $B$ de dimensions $T \times N \times K$ avec $T$ le nombre de mesures ou trames, $N$ le nombre d'échantillons par trame (axe temporel sur la Figure 12), et $K$ le nombre de directions analysées dans l'ensemble de détecteurs de cohérence 21. Les éléments de la matrice B sont notés $b_{i,j,k}$.

Le nombre de directions $K$ est inférieur ou égal au nombre total de directions $M$.

Les éléments de la matrice $B$ correspondent à la densité d'impulsions dans un intervalle $[t, t+t_{trame}]$ avec $t_{trame}$ désignant la longueur d'une trame.

Le détecteur de mouvement 24 utilise ensuite les éléments de la matrice $B$.

Le détecteur de mouvement 24 est configuré pour déterminer une matrice de distance $D = [d_{i,j}]$ en sommant les composants $b_{i,j,k}$ sur la dimension correspondant aux directions :

$$d_{i,j} = \sum_{k=0}^{K-1} b_{i,j,k} \quad (4)$$

Le mouvement peut être quantifié en examinant la différence entre deux trames successives sur la matrice de distance. Une matrice de différence $DD = [dd_{i,j}]$ peut alors être déterminée en différenciant la matrice $D$ sur l'axe de trames :

$$dd_{i,j} = d_{i,j} - d_{i-1,j} \quad (5)$$

Un prédicteur de mouvement $p_i$ peut être ensuite calculé en multipliant la moyenne et le maximum de la différence par trame, selon l'équation (6) :

$$p_i = \max_j dd_{i,j} \times \frac{1}{N} \sum_{j=0}^{N-1} dd_{i,j} \quad (6)$$

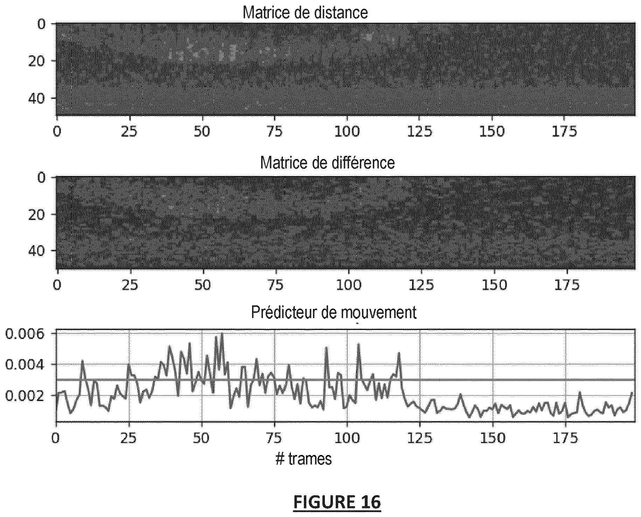

La Figure 16 illustre le calcul d'un prédicteur de mouvement sur des données réelles (matrice de distance, différentiation trame par trame et détection de mouvement). Dans l'exemple de la figure 16, il peut être observé sur la matrice de distance un mouvement de la trame 0 à 120, puis aucun mouvement par la suite. En comparant le prédicteur de mouvement avec un seuil, un signal est obtenu qui peut être utilisé par le détecteur de geste 25 pour déterminer une classification de geste.

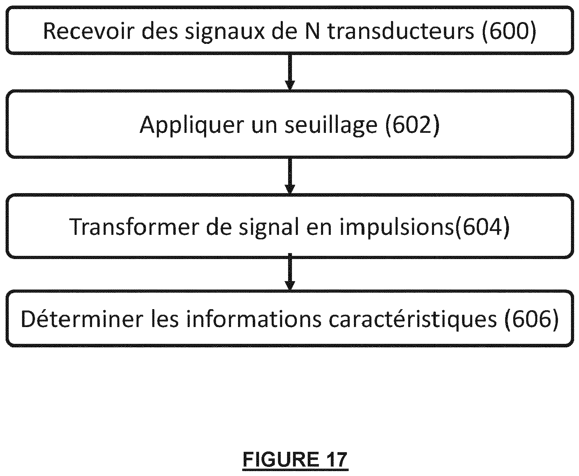

La figure 17 illustre le procédé de traitement de signaux issus d'un ensemble de transducteurs, selon certains modes de réalisation.

À l'étape 600, au moins certains des transducteurs de l'ensemble de transducteurs émettent des signaux et/ou reçoivent des échos correspondant à la réflexion des signaux par un objet détecté 5.

Dans les étapes 602 et 604, une étape de transformation des signaux reçus d'au moins certains transducteurs de l'ensemble de transducteurs en impulsions est mise en oeuvre.

Plus précisément, à l'étape 602, pour chaque signal reçu en réception par un des N transducteurs 10, un seuillage est appliqué à un signal dérivé du signal reçu du transducteur de manière à extraire une information directionnelle contenue dans la phase du signal dérivé, en utilisant au moins un seuil, l'information extraite comprenant les fronts montants et/ou descendants du signal dérivé.

À l'étape 604, le signal dérivé du signal reçu du transducteur est transformé en impulsions contenant la phase du signal, en utilisant le ou les fronts du signal extraits dans l'étape d'application d'un seuillage.

À l'étape 606, une étape de traitement des impulsions obtenues est mise en oeuvre, l'étape de traitement des impulsions comprenant la détermination des informations caractéristiques à partir des impulsions déterminées pour tous les signaux reçus des transducteurs.

Les informations caractéristiques déterminées peuvent être ensuite délivrées pour un traitement complémentaire, ou pour générer un affichage de ces informations. En variante, une action peut être déclenchée en fonction des informations caractéristiques déterminées.

Les modes de réalisation de l'invention permettent de détecter des objets, des gestes ou encore des caractéristiques dynamiques d'objets. Cependant l'homme du métier comprendra aisément que l'invention peut être utilisée dans d'autres applications, par exemple pour une reconnaissance d'empreintes. Dans une application de l'invention à la reconnaissance d'empreinte, l'ensemble de transducteurs 1 peut être une matrice 2D. Chaque transducteur 10 de l'ensemble de transducteurs 1 envoie une impulsion, qui est renvoyée si le transducteur 10 est situé face à un « creux » de la main, et qui est transmis si le transducteur est situé face à la peau. L'ensemble d'impulsions renvoyées est utilisé pour former une image (à quel niveau de la chaine de traitement ?), qui fait ensuite l'objet d'un traitement par le système de traitement 100.

Les modes de réalisation de l'invention permettent ainsi un couplage direct des transducteurs ultrasonores 10 à une unité de traitement d'impulsions 2 (comprenant par exemple un réseau de neurones) permettant de déterminer directement la ou les informations carac-

teristiques, en fonction de l'application de l'invention.

Le système de traitement 100 selon les modes de réalisation de l'invention est avantageusement configuré pour améliorer la résolution angulaire par rapport aux systèmes de transducteurs ultrasonores de l'état de la technique.

Le système de traitement 100 selon les modes de réalisation de l'invention est configuré pour permettre de diminuer la zone aveugle du système de transducteurs, de diminuer la complexité du traitement, et de fournir une robustesse à la dispersion en caractéristique des transducteurs 10 de l'ensemble de transducteurs 1, tout en ayant une certaine compacité (l'ensemble des transducteurs 10 est localisés au même endroit) et en apportant une information angulaire de qualité.

Plus généralement, l'homme du métier comprendra que le dispositif de traitement 100 ou des sous-systèmes du dispositif selon les modes de réalisation de l'invention peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier. En particulier, l'invention n'est pas limitée aux exemples d'applications décrites ci-avant à titre d'exemple. Elle s'applique à d'autres applications dans différents domaines. Par exemple, dans un exemple d'application de l'invention au domaine biomédical, le système de traitement 100 peut être utilisé pour fournir des images obtenues par échographie représentant les échos reçus par un ensemble de transducteurs ultrasonores Dans certains cas, non seulement le premier écho, mais également les échos suivants peuvent être représentés. Le traitement de l'image permet d'extraire l'information de détection définie en fonction de l'application biomédicale (par exemple, épaisseur de la nuque). Les informations fournies peuvent être alors utilisées pour aider au diagnostic médical. Avantageusement, les modes de réalisation permettent de simplifier les traitements de reconstitution d'image de systèmes d'échographie en-dehors des laboratoires.

## Revendications

1. Système de traitement de signaux (100) délivrés par un capteur ultrasonore (1), le capteur ultrasonore comprenant un ensemble de transducteurs (10), au moins certains des transducteurs de l'ensemble de transducteurs étant configurés pour émettre des signaux et/ou recevoir des échos correspondant à la réflexion desdits signaux par un objet détecté (5), des signaux étant transmis par une pluralité de transducteurs du capteur ultrasonore au système de traitement (100) en réponse à la réception d'échos par lesdits transducteurs, le système de traitement étant configuré pour déterminer au moins une information caractéristique relative à l'objet détecté, à partir des signaux reçus des transducteurs du capteur ultrasonore, **caractérisé en ce qu'**il comprend un dispositif de couplage (3) configuré pour transformer les signaux reçus d'au moins certains transducteurs de l'ensemble de transducteurs en impulsions, et une unité de traitement d'impulsions (2) configurée pour traiter les impulsions délivrées par le dispositif de couplage, et **en ce que** le dispositif de couplage comprend :

   - une unité de seuillage (32) configurée pour appliquer, pour chaque signal reçu d'un transducteur, un seuillage à un signal dérivé dudit signal reçu du transducteur de manière à extraire une information directionnelle contenue dans la phase du signal dérivé, en utilisant au moins un seuil, l'information extraite comprenant les fronts montants et/ou descendants du signal dérivé ;
   - une unité de transformation de signal en impulsions (33) configurée pour transformer le signal dérivé du signal reçu du transducteur en des impulsions contenant la phase du signal, en utilisant le ou les fronts du signal extraits par l'unité de seuillage (32) ;

   l'unité de traitement d'impulsions (2) étant configurée pour déterminer au moins une information caractéristique relative à l'objet détecté à partir des impulsions déterminées par le dispositif de couplage pour tous les signaux reçus desdits transducteurs.

2. Système selon la revendication 1, **caractérisé en ce que** l'unité de traitement d'impulsions (2) comprend au moins un classificateur (20).

3. Système selon la revendication 2, **caractérisé en ce que** ledit au moins un classificateur comprend un classificateur principal, le classificateur principal étant un classificateur de type réseau de neurones impulsionnel (20) ou classificateur non-évènementiel.

4. Système selon l'une des revendications 2 et 3, **caractérisé en ce que** ledit au moins un classificateur (20) comprend en outre un classificateur secondaire (200) pour déterminer l'amplitude du seuil utilisé par l'unité de seuillage (32) parmi un ensemble de valeurs possibles d'amplitudes de seuil à partir des impulsions reçues du dispositif de couplage.

5. Système selon l'une des revendications précédentes, **caractérisé en ce qu'**il comprend en outre un ensemble d'amplificateurs (311), l'ensemble d'amplificateurs (311) comprenant au moins un amplificateur et étant configuré pour amplifier la tension analogique de chaque signal reçu du transducteur.

6. Système selon la revendication 5, **caractérisé en ce qu'**il comprend en outre un ensemble de filtres passe-bande (312), l'ensemble de filtres passe-bande (312) comprenant au moins un filtre passe-bande, et étant configuré pour filtrer la tension amplifiée par l'ensemble d'amplificateurs (311) de manière à éliminer le bruit en dehors de la bande passante, ledit signal dérivé de chaque signal reçu du transducteur étant le signal délivré par l'ensemble de filtres passe-bande.

7. Système selon l'une des revendications précédentes, **caractérisé en ce qu'**il comprend un contrôleur (34) configuré pour adapter un ou plusieurs paramètres de mise en forme des signaux reçus des transducteurs (10) en fonction d'un ou plusieurs critères d'adaptation en utilisant des signaux provenant de l'unité de traitement d'impulsions (2).

8. Système selon la revendication 7, **caractérisé en ce que** le contrôleur (34) est configuré pour adapter le seuil utilisé par l'unité de seuillage (32) en fonction de la distance entre le capteur ultrasonore (1) et ledit objet, ou en fonction de la qualité de mesures précédentes effectuées par le capteur ultrasonore (1), ladite qualité étant calculée dans le domaine des impulsions ou après une conversion en nombre réel de la densité des impulsions.

9. Système selon l'une des revendications 5 à 8, **caractérisé en ce que** l'unité de traitement d'impulsions (2) comprend un ensemble de détecteurs de cohérence (21) comprenant au moins un détecteur de cohérence et une unité de détermination d'informations caractéristiques (2), l'ensemble des détecteurs de cohérence (21) étant configurés pour détecter si les signaux provenant desdits transducteurs sont cohérents, pour une direction donnée des échos provenant de l'objet, à partir des impulsions délivrées par l'unité de transformation en impulsions (33), et pour délivrer lesdites impulsions à l'unité de détermination d'informations caractéristiques (2) si une cohérence est détectée.

10. Système selon la revendication 9, **caractérisé en ce que** l'unité de détermination des informations caractéristiques est une unité de mesure (23) de la distance et/ou la direction des échos provenant de l'objet.

11. Système selon la revendication 10, **caractérisé en ce que** l'unité de détermination des informations caractéristiques est un classificateur (24).

12. Système selon l'une des revendications 9 et 10, **caractérisé en ce qu'**un détecteur de cohérence (21) comprend un intégrateur de fuite pour mesurer un alignement des fronts des signaux reçus desdits transducteurs (10) de l'ensemble de transducteurs (1).

13. Système selon l'une des revendications 9 et 10, **caractérisé en ce qu'**un détecteur de cohérence (21) comprend une unité de fenêtrage configurée pour appliquer un fenêtrage pour détecter une cohérence entre les signaux reçus desdits transducteurs à partir des impulsions délivrées par le dispositif de couplage, l'unité de fenêtrage étant configurée pour décompter le nombre d'impulsions, parmi tous les canaux de transmission correspondant aux différents transducteurs de l'ensemble de transducteurs (1), dans une fenêtre de largeur donnée.

14. Système selon l'une des revendications 9 à 13, **caractérisé en ce qu'**il comprend en outre un filtre passe-bas en sortie de l'ensemble de détecteurs de cohérence (21) configurés pour fournir une image de la densité des impulsions délivrées par l'ensemble de détecteurs de cohérence et une unité d'échantillonnage configurée pour échantillonner le signal à basse-fréquence reçu du filtre passe-bas.

15. Système selon l'une des revendications 9 à 13, **caractérisé en ce qu'**il comprend en outre un compteur asynchrone agencé en sortie de l'ensemble de détecteurs de cohérence configuré pour décompter les impulsions et échantillonner la sortie de l'ensemble de détecteurs de cohérence avec un signal d'horloge.

16. Système selon l'une des revendications 9 à 13, **caractérisé en ce qu'**il comprend en outre un détecteur de mouvement (24) agencé en sortie de l'ensemble de détecteurs de cohérence pour détecter la présence de mouvement dans la zone surveillée par le capteur ultrasonore (1).

17. Procédé de traitement de signaux délivrés par un capteur ultrasonore (1), le capteur ultrasonore comprenant un ensemble de transducteurs, au moins certains des transducteurs de l'ensemble de transducteurs émettant des signaux et/ou recevant des échos correspondant à la réflexion desdits signaux par un objet détecté, le procédé comprenant la détermination d'au moins une information caractéristique relative à l'objet détecté, à partir des signaux reçus des transducteurs du capteur ultrasonore, **caractérisé en ce que** le procédé comprend une étape de transformation des signaux reçus d'au moins certains transducteurs de l'ensemble de transducteurs en impulsions, et une étape de traitement desdites impulsions, l'étape de transformation comprenant, pour chaque signal reçu d'un transducteur :

    - une application d'un seuillage à un signal dérivé dudit signal délivré par le transducteur de manière à extraire une information directionnelle contenue dans la phase du signal dérivé, en utilisant au moins un seuil, l'information extraite comprenant les fronts montants et/ou descendants du signal dérivé ;

    - une transformation du signal dérivé du signal reçu du transducteur en des impulsions contenant la phase du signal, en utilisant le ou les fronts du signal extraits dans l'étape d'application d'un seuillage ;

et **en ce que** l'étape de traitement des impulsions (2) comprend la détermination des informations caractéristiques à partir des impulsions déterminées pour tous les signaux reçus desdits transducteurs.


**Patentansprüche**

1. System (100) zur Verarbeitung von Signalen, die von einem Ultraschallsensor (1) geliefert werden, wobei der Ultraschallsensor einen Satz von Wandlern (10) umfasst, wobei mindestens einige der Wandler des Satzes von Wandlern dafür konfiguriert sind, Signale auszusenden und/oder der Reflexion der Signale von einem erkannten Objekt (5) entsprechende Echos zu empfangen, wobei als Reaktion auf den Empfang von Echos durch die Wandler Signale von einer Vielzahl von Wandlern des Ultraschallsensors an das Verarbeitungssystem (100) übertragen werden, wobei das Verarbeitungssystem dafür konfiguriert ist, mindestens eine charakteristische Information betreffend das erkannte Objekt anhand der von den Wandlern des Ultraschallsensors empfangenen Signale zu bestimmen, **dadurch gekennzeichnet, dass** es eine Kopplungsvorrichtung (3) umfasst, die dafür konfiguriert ist, die von mindestens einigen Wandlern des Satzes von Wandlern empfangenen Signale in Impulse umzuwandeln, und eine Impulsverarbeitungseinheit (2), die dafür konfiguriert ist, die von der Kopplungsvorrichtung gelieferten Impulse zu verarbeiten, und dadurch, dass die Kopplungsvorrichtung Folgendes umfasst:

    - eine Schwellenwertbildungseinheit (32), die dafür konfiguriert ist, für jedes von einem Wandler empfangene Signal eine Schwellenwertbildung auf ein von dem von dem Wandler empfangenen Signal abgeleitetes Signal anzuwenden, um unter Verwendung mindestens eines Schwellenwertes eine Richtungsinformation, die in der Phase des abgeleiteten Signals enthalten ist, zu extrahieren, wobei die extrahierte Information die steigenden und/oder fallenden Flanken des abgeleiteten Signals umfasst;
    - eine Einheit zum Umwandeln eines Signals in Impulse (33), die dafür konfiguriert ist, unter Verwendung der einen oder der mehreren Signalflanken, die von der Schwellenwertbildungseinheit (32) extrahiert werden, das von dem von dem Wandler empfangenen Signal abgeleitete Signal in Impulse umzuwandeln, die die Phase des Signals enthalten;

wobei die Impulsverarbeitungseinheit (2) dafür konfiguriert ist, mindestens eine charakteristische Information betreffend das erkannte Objekt anhand der von der Kopplungsvorrichtung bestimmten Impulse für alle von den Wandlern empfangenen Signale zu bestimmen.

2. System nach Anspruch 1, **dadurch gekennzeichnet, dass** die Impulsverarbeitungseinheit (2) mindestens einen Klassifizierer (20) umfasst.

3. System nach Anspruch 2, **dadurch gekennzeichnet, dass** der mindestens eine Klassifizierer einen Hauptklassifizierer umfasst, wobei der Hauptklassifizierer ein Klassifizierer eines gepulsten neuronalen Netzes (20) oder ein nicht ereignisgetriebener Klassifizierer ist.

4. System nach einem der Ansprüche 2 und 3, **dadurch gekennzeichnet, dass** der mindestens eine Klassifizierer (20) ferner einen sekundären Klassifizierer (200) umfasst, um aus einem Satz von möglichen Schwellenamplitudenwerten anhand der von der Kopplungsvorrichtung empfangenen Impulse die Amplitude des Schwellenwertes zu bestimmen, die von der Schwellenwertbildungseinheit (32) verwendet wird.

5. System nach einem der vorhergehenden Ansprüche, **dadurch gekennzeichnet, dass** es ferner einen Satz von Verstärkern (311) umfasst, wobei der Satz von Verstärkern (311) mindestens einen Verstärker umfasst und dafür konfiguriert ist, die analoge Spannung jedes von dem Wandler empfangenen Signals zu verstärken.

6. System nach Anspruch 5, **dadurch gekennzeichnet, dass** es ferner einen Satz von Bandpassfiltern (312) umfasst, wobei der Satz von Bandpassfiltern (312) mindestens ein Bandpassfilter umfasst und dafür konfiguriert ist, die von dem Satz von Verstärkern (311) verstärkte Spannung so zu filtern, dass das Rauschen außerhalb des Passbandes eliminiert wird, wobei das von jedem von dem Wandler empfangenen Signal abgeleitete Signal das von dem Satz von Bandpassfiltern gelieferte Signal ist.

7. System nach einem der vorhergehenden Ansprüche, **dadurch gekennzeichnet, dass** es eine Steuerung (34) umfasst, die dafür konfiguriert ist, einen oder mehrere Parameter zum Formen der von den Wandlern (10) empfangenen Signale in Abhängigkeit von einem oder mehreren Anpassungskriterien unter Verwendung von von der Impulsverarbeitungseinheit (2) stammenden Signalen anzupassen.

8. System nach Anspruch 7, **dadurch gekennzeichnet, dass** die Steuerung (34) dafür konfiguriert ist, den von der Schwellenwertbildungseinheit (32) verwendeten Schwellenwert in Abhängigkeit von dem Abstand zwischen dem Ultraschallsensor (1) und dem Objekt oder in Abhängigkeit von der Qualität von vorherigen, von dem Ultraschallsensor (1) ausgeführten Messungen anzupassen, wobei die Qualität in dem Impulsbereich oder nach einem Umwandeln der Impulsdichte in eine reelle Zahl berechnet wird.

9. System nach einem der Ansprüche 5 bis 8, **dadurch gekennzeichnet, dass** die Impulsverarbeitungseinheit (2) einen Satz von Kohärenzdetektoren (21) umfasst, die mindestens einen Kohärenzdetektor und eine Einheit zum Bestimmen von charakteristischen Informationen (2) umfasst, wobei der Satz der Kohärenzdetektoren (21) dafür konfiguriert ist, für eine gegebene Richtung der von dem Objekt stammenden Echos anhand der von der Einheit zum Umwandeln in Impulse (33) gelieferten Impulse zu erkennen, ob die von den Wandlern stammenden Signale kohärent sind, und die Impulse an die Einheit zum Bestimmen von charakteristischen Informationen (2) zu liefern, wenn eine Kohärenz erkannt wird.

10. System nach Anspruch 9, **dadurch gekennzeichnet, dass** die Einheit zum Bestimmen der charakteristischen Informationen eine Einheit (23) zum Messen des Abstands und/oder der Richtung der von dem Objekt stammenden Echos ist.

11. System nach Anspruch 10, **dadurch gekennzeichnet, dass** die Einheit zum Bestimmen von charakteristischen Informationen ein Klassifizierer (24) ist.

12. System nach einem der Ansprüche 9 und 10, **dadurch gekennzeichnet, dass** ein Kohärenzdetektor (21) einen Leckintegrator umfasst, um eine Ausrichtung der Flanken der Signale, die von den Wandlern (10) des Satzes von Wandlern (1) empfangen werden, zu messen.

13. System nach einem der Ansprüche 9 und 10, **dadurch gekennzeichnet, dass** ein Kohärenzdetektor (21) eine Befensterungseinheit umfasst, die dafür konfiguriert ist, anhand der von der Kopplungsvorrichtung gelieferten Impulse eine Befensterung zum Erkennen einer Kohärenz zwischen den von den Wandlern empfangenen Signalen anzuwenden, wobei die Befensterungseinheit dafür konfiguriert ist, die Anzahl an Impulsen unter allen Übertragungskanälen entsprechend den verschiedenen Wandlern des Satzes von Wandlern (1) in einem Fenster einer gegebenen Breite zu zählen.

14. System nach einem der Ansprüche 9 bis 13, **dadurch gekennzeichnet, dass** es ferner ein Tiefpassfilter am Ausgang des Satzes von Kohärenzdetektoren (21), die dafür konfiguriert sind, ein Bild der Dichte der von dem Satz von Kohärenzdetektoren gelieferten Impulse bereitzustellen, und eine Abtasteinheit umfasst, die dafür konfiguriert ist, das von dem Tiefpassfilter empfangene Niederfrequenzsignal abzutasten.

15. System nach einem der Ansprüche 9 bis 13, **dadurch gekennzeichnet, dass** es ferner einen asynchronen Zähler umfasst, der am Ausgang des Satzes von Kohärenzdetektoren angeordnet ist, der dafür konfiguriert ist, die Impulse zu zählen und den Ausgang des Satzes von Kohärenzdetektoren mit einem Taktsignal abzutasten.

16. System nach einem der Ansprüche 9 bis 13, **dadurch gekennzeichnet, dass** es ferner einen Bewegungsdetektor (24) umfasst, der am Ausgang des Satzes von Kohärenzdetektoren angeordnet ist, um das Vorliegen einer Bewegung in der von dem Ultraschallsensor (1) überwachten Zone zu erkennen.

17. Verfahren zur Verarbeitung von Signalen, die von einem Ultraschallsensor (1) geliefert werden, wobei der Ultraschallsensor einen Satz von Wandlern umfasst, wobei mindestens einige der Wandler des Satzes von Wandlern Signale aussenden und/oder der Reflexion der Signale von einem erkannten Objekt entsprechende Echos empfangen, wobei das Verfahren das Bestimmen mindestens einer charakteristischen Information betreffend das erkannte Objekt anhand der von den Wandlern des Ultraschallsensors empfangenen Signale umfasst, **dadurch gekennzeichnet, dass** das Verfahren einen Schritt zum Umwandeln der von mindestens einigen Wandlern des Satzes von Wandlern empfangenen Signale in Impulse und einen Schritt zum Verarbeiten der Impulse umfasst, wobei der Umwandlungsschritt für jedes von einem Wandler empfangene Signal Folgendes umfasst:

- Anwenden einer Schwellenwertbildung auf ein von dem von dem Wandler empfangenen Signal abgeleitetes Signal, um eine Richtungsinformation, die in der Phase des abgeleiteten Signals enthalten ist, unter Verwendung von mindestens eines Schwellenwertes zu extrahieren, wobei die extrahierte Information die steigenden und/oder fallenden Flanken des abgeleiteten Signals umfasst;

- Umwandeln des von dem von dem Wandler empfangenen Signal abgeleiteten Signals in Impulse, die die Phase des Signals enthalten, unter Verwendung der einen oder der mehreren Signalflanken, die in dem Schritt des Anwendens einer Schwellenwertbildung extrahiert werden;

und dadurch, dass der Schritt zum Verarbeiten der Impulse (2) das Bestimmen der charakteristischen Informationen anhand der für alle von den Wandlern empfangenen Signale bestimmten Impulse umfasst.

**Claims**

1. A system (100) for processing signals delivered by an ultrasonic sensor (1), the ultrasonic sensor comprising a set of transducers (10), at least some of the transducers of the set of transducers being configured to emit signals and/or receive echoes corresponding to the reflection of said signals by a detected object (5), signals being transmitted by a plurality of transducers of the ultrasonic sensor to the processing system (100) in response to the reception of echoes by said transducers, the processing system being configured to determine at least one characteristic item of information relating to the detected object, based on the signals received from the transducers of the ultrasonic sensor, **characterised in that** it comprises a coupling device (3) configured to transform the signals received from at least some transducers of the set of transducers into pulses, and a pulse processing unit (2) configured to process the pulses delivered by the coupling device, and **in that** the coupling device comprises:

- a thresholding unit (32) configured to apply, for each signal received from a transducer, thresholding to a signal derived from said signal received from the transducer, so as to extract an item of directional information contained in the phase of the derived signal, using at least one threshold, the extracted item of information comprising the rising and/or falling edges of the derived signal;

- a signal-to-pulse transformation unit (33) configured to transform the signal derived from the signal received from the transducer into pulses containing the phase of the signal, using the one or more signal edges extracted by the thresholding unit (32);

the pulse processing unit (2) being configured to determine at least one characteristic item of information relating to the detected object based on the pulses determined by the coupling device for all of the signals received from said transducers.

2. The system according to claim 1, **characterised in that** the pulse processing unit (2) comprises at least one classifier (20).

3. The system according to claim 2, **characterised in that** said at least one classifier comprises a main classifier, the main classifier being a pulsed neural network classifier (20) or a non-event-driven classifier.

4. The system according to one of claims 2 and 3, **characterised in that** said at least one classifier (20) further comprises a secondary classifier (200) for determining the amplitude of the threshold used by the thresholding unit (32) among a set of possible threshold amplitude values based on the pulses received from the coupling device.

5. The system according to one of the preceding claims, **characterised in that** it further comprises a set of amplifiers (311), the set of amplifiers (311) comprising at least one amplifier and being configured to amplify the analogue voltage of each signal received from the transducer.

6. The system according to claim 5, **characterised in that** it further comprises a set of bandpass filters (312), the set of bandpass filters (312) comprising at least one bandpass filter and being configured to filter the voltage amplified by the set of amplifiers (311) so as to eliminate noise outside the passband, said signal derived from each signal received from the transducer being the signal delivered by the set of bandpass filters.

7. The system according to one of the preceding claims, **characterised in that** it comprises a controller (34) configured to adapt one or more shaping parameters of the signals received from the transducers (10) depending on one or more adaptation criteria using signals coming from the pulse processing unit (2).

8. The system according to claim 7, **characterised in that** the controller (34) is configured to adapt the threshold used by the thresholding unit (32) depending on the distance between the ultrasonic sensor (1) and said object, or depending on the quality of previous measurements performed by the ultrasonic sensor (1), said quality being computed in the pulse domain or after converting the pulse density into a real number.

9. The system according to one of claims 5 to 8, **characterised in that** the pulse processing unit (2) comprises a set of coherence detectors (21) comprising at least one coherence detector and a characteristic information determination unit (2), the set of coherence detectors (21) being configured to detect whether the signals coming from said transducers are coherent, for a given direction of the echoes coming from the object, based on the pulses delivered by the into-pulse transformation unit (33), and to deliver said pulses to the characteristic information determination unit (2) if coherence is detected.

10. The system according to claim 9, **characterised in that** the characteristic information determination unit is a unit (23) for measuring the distance and/or the direction of the echoes coming from the object.

11. The system according to claim 10, **characterised in that** the characteristic information determination unit is a classifier (24).

12. The system according to one of claims 9 and 10, **characterised in that** a coherence detector (21) comprises a leak integrator for measuring an alignment of the edges of the signals received from said transducers (10) of the set of transducers (1).

13. The system according to one of claims 9 and 10, **characterised in that** a coherence detector (21) comprises a windowing unit configured to apply windowing to detect coherence between the signals received from said transducers based on the pulses delivered by the coupling device, the windowing unit being configured to count the number of pulses, among all of the transmission channels corresponding to the various transducers of the set of transducers (1), within a window of given width.

14. The system according to one of claims 9 to 13, **characterised in that** it further comprises a low-pass filter at the output of the set of coherence detectors (21), which are configured to provide an image of the density of the pulses delivered by the set of coherence detectors and a sampling unit configured to sample the low-frequency signal received from the low-pass filter.

15. The system according to one of claims 9 to 13, **characterised in that** it further comprises an asynchronous counter arranged at the output of the set of coherence detectors, which are configured to count the pulses and sample the output of the set of coherence detectors with a clock signal.

16. The system of one of claims 9 to 13, **characterised in that** it further comprises a motion detector (24) arranged at the output of the set of coherence detectors to detect the presence of motion in the region monitored by the ultrasonic sensor (1).

17. A method of processing signals delivered by an ultrasonic sensor (1), the ultrasonic sensor comprising a set of transducers, at least some of the transducers of the set of transducers emitting signals and/or receiving echoes corresponding to the reflection of said signals by a detected object, the method comprising determining at least one characteristic item of information relating to the detected object, based on the signals received from the transducers of the ultrasonic sensor, **characterised in that** the method comprises a step of transforming the signals received from at least some transducers of the set of transducers into pulses, and a step of processing said pulses, the transformation step comprising, for each signal received from a transducer:

    - applying thresholding to a signal derived from said signal delivered by the transducer, so as to extract an item of directional information contained in the phase of the derived signal using at least one threshold, the extracted item of information comprising the rising and/or falling edges of the derived signal;
    - transforming the signal derived from the signal received from the transducer into pulses containing the phase of the signal, using the one or more signal edges extracted in the step of applying thresholding;

and **in that** the step of processing the pulses (2) comprises determining the characteristic information based on the pulses determined for all of the signals received from said transducers.

EP 4 083 659 B1

200

100

10

40

5

1

3

2

10

1-TX

Dispositif de couplage

Unité de
traitement
d'impulsions

10

Unité de
pré-
traitement

Unité de
seuillage

Unité de
transformation
en impulsions

41

1-RX

31

32

33

10

**FIGURE 1**

21

FIGURE 2

Direction d'arrivée

$\alpha$

$2d \sin \alpha$

$M_0$  $M_1$  $M_2$

$d$  $d$

**FIGURE 3**

**FIGURE 4**

100

FIGURE 5

Durée d'impulsion

Période de mesure

**FIGURE 6**

Données d'entrée

7A

Données filtrées et seuillage

7B

Données transformées

7C

Temps (en µs)

**FIGURE 7**

**FIGURE 8**

100

40

1-TX

34

3

5

41

2

21

22

Signal TX | Contrôleur | Seuil adaptatif

1-RX

N transducteurs

Amplificateur | Filtre passe-bande | Unité de seuillage | Unité de transfor-mation | Détecteurs de cohérence | Unité de détermination d'informations caractéristiques

**M Directions**

311

312

32

33

31

**FIGURE 9**

**FIGURE 10**

**FIGURE 11**

**FIGURE 12**

100

34          3

40    1-TX

5

41    1-RX

Signal TX | Contrôleur    Seuil adaptatif

N transducteurs

Amplificateur | Filtre passe-bande | Unité de seuillage | Unité de transfor-mation

311          312    32    33

31

21    2    20

Détecteurs de cohérence | Réseau SNN

M Directions

**FIGURE 13**

100

34          3

40    1-TX

5

41    1-RX

Signal TX | Contrôleur    Seuil adaptatif

N transducteurs

Amplificateur | Filtre passe-bande | Unité de seuillage | Unité de transfor-mation

311          312    313    314

31

21    2    23    20

Détecteurs de cohérence | Bloc de post-filtrage | Classificateur non-évènementiel

M Directions

**FIGURE 14**

100

5

40

41

1-TX

1-RX    N transducteurs

34

Signal TX | Contrôleur | Seuil adaptatif

Amplificateur

Filtre
passe-
bande

Unité de
seuillage

Unité de
transformation

3

21

24

2

Détecteur de
mouvement

Détecteurs
de
cohérence

Classificateur

M Directions

20

311    312    32    33

31

**FIGURE 15**

FIGURE 16

y

y

z

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. NANDAKUMAR ; V. LYER ; D. TAN ; S. GOLLA-KOTA.** FingerIO: Using Active Sonar for Fine-Grained Finger Tracking. *Proceedings of the 2016 CHI Conférence on Human Factors in Computing Systems, New York, NY, USA,* Mai 2016, 1515-1525
- **A. DAS ; I. TASHEV ; S. MOHAMMED.** Ultrasound based gesture récognition. *2017 IEEE International Conférence on Acoustics, Speech and Signal Processing (ICASSP),* Mars 2017, 406-410
- **K. LING ; H. DAI ; Y. LIU ; A. X. LIU.** UltraGesture: Fine-Grained Gesture Sensing and Récognition. *2018 15th Annual IEEE International Conférence on Sensing, Communication, and Networking (SECON),* Juin 2018, 1-9
- **W. WANG ; A. X. LIU ; K. SUN.** Device-free gesture tracking using acoustic signais. *Proceedings of the 22nd Annual International Conférence on Mobile Computing and Networking, New York, NY, USA,* Octobre 2016, 82-94
- **S. YUN ; Y.-C. CHEN ; L. QIU.** Turning a Mobile Device into a Mouse in the Air. *Proceedings of the 13th Annual International Conférence on Mobile Systems, Applications, and Services, New York, NY, USA,* Mai 2015, 15-29
- **X. LI ; H. DAI ; L. CUI ; Y. WANG.** SonicOperator: Ultrasonic gesture recognition with deep neural network on mobiles. *2017 IEEE SmartWorld, Ubiquitous Intelligence Computing, Advanced Trusted Computed, Scalable Computing Communications, Cloud Big Data Computing, Internet of People and Smart City Innovation (SmartWorld/SCALCOM/UIC/ATC/CBD-Com/IOP/SCI),* Août 2017, 1-7
- **E. A. IBRAHIM ; M. GEILEN ; J. HUISKEN ; M. LI ; J. P. DE GYVEZ.** Low Complexity Multi-directional In-Air Ultrasonic Gesture Recognition Using a TCN. *2020 Design, Automation Test in Europe Conférence Exhibition (DATE),* Mars 2020, 1259-1264
- **CHEN HUI et al.** Angle-of-arrival-based gesture recognition using ultrasonic multi-frequency signals. *2017 25TH EUROPEAN SIGNAL PROCESSING CONFERENCE (EUSIPCO), EURASIP,* 28 Août 2017, 16-20